(19) Europäisches Patentamt
European Patent Office
Office européen des brevets

(11) **EP 2 524 602 A1**

(12) # EUROPÄISCHE PATENTANMELDUNG

(43) Veröffentlichungstag:
**21.11.2012 Patentblatt 2012/47**

(51) Int Cl.:
***A01N 57/20*** *(2006.01)* ***A01N 43/40*** *(2006.01)*
***A01N 43/54*** *(2006.01)* ***A01P 13/02*** *(2006.01)*

(21) Anmeldenummer: **11166986.7**

(22) Anmeldetag: **20.05.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Bayer CropScience AG**
**40789 Monheim (DE)**

(72) Erfinder:
- **Hacker, Erwin, Dr.**
  **65239 Hochheim (DE)**
- **Dietrich, Hansjörg, Dr.**
  **65835 Liederbach (DE)**
- **Trabold, Klaus**
  **69123 Heidelberg (DE)**
- **Gatzweiler, Elmar, Dr.**
  **63654 Büdingen (DE)**
- **Ziemer, Frank, Dr.**
  **65830 Kriftel (DE)**

(54) **Herbizide Mittel für tolerante oder resistente Sojakulturen**

(57) Gegenstand der Erfindung sind Herbizid-Kombinationen und die Verwendung von Herbizid-Kombinationen zur Bekämpfung von Schadpflanzen in Soja- und Leguminosenarten, dadurch gekennzeichnet, dass die jeweilige Herbizid-Kombination
(A) ein Herbizid aus der Gruppe der Verbindungen der Formel (A1),

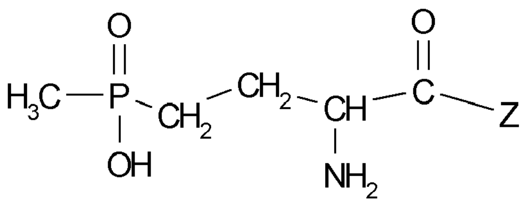

(A1)

worin Z für Hydroxy, $-NHCH(CH_3)CONHCH(CH_3)COOH$ oder $-NHCH(CH_3)CONHCH[CH_2CH(CH_3)_2]COOH$ steht, oder dessen Ester oder Salze, und
(B) ein Herbizid der Formel (B1),

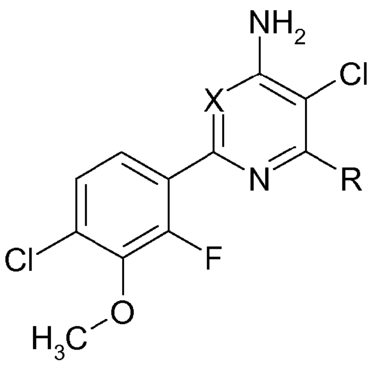

(B1)

worin X für N oder CH steht und R für $CO_2H$ oder ein herbizid-aktives Derivat steht,

enthält und die Soja- und Leguminosenarten gegenüber den in der Kombination enthaltenen Herbiziden (A) und (B),

EP 2 524 602 A1

gegebenenfalls in Gegenwart von Safenern, tolerant sind.

**Beschreibung**

Die Erfindung liegt auf dem Gebiet der Pflanzenschutzmittel, die gegen Schadpflanzen in toleranten oder resistenten Kulturen von Soja und anderen Leguminosenarten, wie z.B. Bohnen, Erbsen und Linsen, eingesetzt werden können und als Herbizidwirkstoffe eine Kombination von zwei oder mehreren Herbiziden enthalten.

Mit der Einführung von toleranten oder resistenten Soja- und Leguminosenarten /- und -linien, insbesondere von transgenen Soja- und Leguminosenarten und -linien, wird das herkömmliche Unkrautbekämpfungssystem um neue, per se in herkömmlichen Soja- und Leguminosenarten nicht-selektive Wirkstoffe ergänzt. Die Wirkstoffe sind beispielsweise bekannte breitwirksame Herbizide wie Glyphosate, Sulfosate, Glufosinate, Bialaphos und Imidazolinon-Herbizide, die nunmehr in den jeweils für sie entwickelten toleranten Kulturen eingesetzt werden können. Die Wirksamkeit dieser Herbizide gegen Schadpflanzen in den toleranten Kulturen liegt auf einem hohen Niveau, hängt jedoch - ähnlich wie bei anderen Herbizidbehandlungen - von der Art des eingesetzten Herbizids, dessen Aufwandmenge, der jeweiligen Zubereitungsform, den jeweils zu bekämpfenden Schadpflanzen, den Klima- und Bodenverhältnissen, etc. ab. Ferner weisen die Herbizide Schwächen (Lücken) gegen spezielle Arten von Schadpflanzen auf. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbizide oder geographisch begrenzt auftreten können. Wirkungsverluste bei einzelnen Pflanzen lassen sich nur bedingt, wenn überhaupt, durch höhere Aufwandmengen der Herbizide ausgleichen. Außerdem besteht immer Bedarf für Methoden, die Herbizidwirkung mit geringerer Aufwandmenge an Wirkstoffen zu erreichen.

Eine Möglichkeit zur Verbesserung des Anwendungsprofils eines Herbizids kann in der Kombination des Wirkstoffs mit einem oder mehreren anderen Wirkstoffen bestehen, welche die gewünschten zusätzlichen Eigenschaften beisteuern. Allerdings treten bei der kombinierten Anwendung mehrerer Wirkstoffe nicht selten Phänomene der chemischen, physikalischen und biologischen Unverträglichkeit auf, z. B. mangelnde Stabilität einer Coformulierung, Zersetzung eines Wirkstoffes bzw. Antagonismus der biologischen Wirkung der Wirkstoffe. Erwünscht dagegen sind Kombinationen von Wirkstoffen mit günstigem Wirkungsprofil (Wirkniveau, Verträglichkeit), hoher Stabilität und möglichst synergistisch verstärkter Wirkung, welche eine Reduzierung der Aufwandmenge im Vergleich zur Einzelapplikation der zu kombinierenden Wirkstoffe erlaubt.

Überraschenderweise wurde nun gefunden, dass bestimmte Wirkstoffe aus der Gruppe der genannten breitwirksamen Herbizide (A) in Kombination mit bestimmten Herbiziden (B) in besonders günstiger (synergistischer) Weise zusammenwirken, wenn sie in Soja- und Leguminosenarten eingesetzt werden, die für die selektive Anwendung der erstgenannten Herbizide geeignet sind.

Gegenstand der Erfindung ist somit die Verwendung von Herbizid-Kombinationen zur Bekämpfung von Schadpflanzen in Sojakulturen, dadurch gekennzeichnet, dass die jeweilige Herbizid-Kombination

(A) ein Herbizid aus der Gruppe der Verbindungen der Formel (A1),

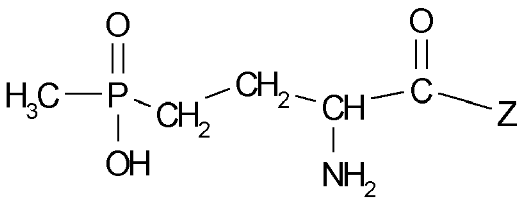

(A1)

worin Z für Hydroxy, $-NHCH(CH_3)CONHCH(CH_3)COOH$ oder $-NHCH(CH_3)CONHCH[CH_2CH(CH_3)_2]COOH$ steht, oder dessen Ester oder Salze, und

(B) ein Herbizid der Formel (B1),

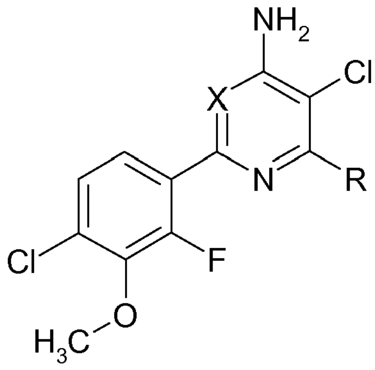

(B1)

worin X für N oder CH steht und R für $CO_2H$ oder ein herbizid-aktives Derivat steht,

enthält und die Soja- undLeguminosenarten gegenüber den in der Kombination enthaltenen Herbiziden (A) und (B), gegebenenfalls in Gegenwart von Safenern, tolerant sind.

Die Verbindungen (A) und (B) sind bekannt. Verbindungen vom Typ (A1) sind beispielsweise beschrieben in DE-A 2717440. Verbindungen vom Typ (B1) sind beispielsweise beschrieben in WO 2007/082098. Mischungen dieser Verbindungen mit anderen Herbiziden sind z.B. beschrieben in WO 2009/029518. Dort werden auch synergistische Mischungen mancher der erfindungsgemäßen (B)-Komponenten mit dem Totalherbizid Glyphosate beschrieben, aber nicht deren Verwendung in toleranten Kulturen, sondern lediglich Synergismus in Bezug auf die herbizide Wirkung gegen Ungräser/Unkräuter.

Als Komponente (A) bevorzugt sind jeweils für sich genommen

- Glufosinate und dessen Salze,
- L-Glufosinate und dessen Salze und
- Bialaphos und dessen Salze.

Als Komponente (A) besonders bevorzugt sind jeweils für sich genommen

- Glufosinate-ammonium (A1.1),
- L-Glufosinate-ammonium (A1.2) und
- Bialaphos-natrium (A1.3).

Verbindungen der allgemeinen Formel (B1), in denen der Substituent R für $CO_2H$ (also Carbonsäure-Funktion) steht, werden als diejenigen Verbindungen angenommen, welche an die aktive Stelle eines Pflanzenenzyms oder eines Rezeptors binden und dadurch eine herbizide Wirkung an der Pflanze hervor rufen. Andere Verbindungen der allgemeinen Formel (B1), worin der Substituent R eine Gruppe ist, welche innerhalb von Pflanzen oder der Umwelt in eine Carbonsäurefunktion (also $CO_2H$) umgewandelt werden kann, erzeugen einen ähnlichen herbiziden Effekt und werden von der vorliegenden Erfindung ebenfalls umfasst. Somit werden im Rahmen der vorliegenden Erfindung unter einem herbizid-aktiven Derivat insbesondere Salze, Ester, Carboxamide, Acylhydrazide, Imidate, Thioimidate, Amidine, Acylhalogenide, Acylcyanide, Säureanhydride, Ether, Acetale, Orthoester, Carboxaldehyde, Oxime, Hydrazone, Thiosäuren, Thioester, Dithiolester, Nitrile und jedes andere beliebige Carbonsäurederivat, welches die herbizide Wirkung der Verbindung der allgemeinen Formel (B1) nicht auslöscht und in Pflanzen und/oder im Boden beispielsweise durch Hydrolyse, Oxidation, Reduktion bzw. andersartige Metabolisierung die Carbonsäurefunktion bereitstellt, welche je nach pH-Wert in dissoziierter oder undissoziierter Form vorliegt, verstanden.

Die Verbindungen der Formel (B1) können ferner durch Anlagerung einer geeigneten anorganischen oder organischen Säure, wie beispielsweise HCl, HBr, $H_2SO_4$ oder $HNO_3$, aber auch Oxalsäure oder Sulfonsäuren an eine basische Gruppe, wie z.B. Amino oder Alkylamino, Salze bilden. Geeignete Substituenten, die in deprotonierter Form, wie z.B. Sulfonsäuren oder Carbonsäuren, vorliegen, können innere Salze mit ihrerseits protonierbaren Gruppen, wie Aminogruppen bilden. Salze können ebenfalls dadurch gebildet werden, dass bei geeigneten Substituenten, wie z.B. Sulfonsäuren oder Carbonsäuren, der Wasserstoff durch ein für die Landwirtschaft geeignetes Kation ersetzt wird. Diese

Salze sind beispielsweise Metallsalze, insbesondere Alkalimetallsalze oder Erdalkalimetallsalze, insbesondere Natrium- und Kaliumsalze, oder auch Ammoniumsalze, Salze mit organischen Aminen oder quartäre (quaternäre) Ammoniumsalze mit Kationen der Formel $[NRR'R''R''']^+$, worin R bis R''' jeweils unabhängig voneinander einen organischen Rest, insbesondere Alkyl, Aryl, Aralkyl oder Alkylaryl darstellen.

Insbesondere können die Verbindungen der allgemeinen Formel (B1) auch N-Oxide umfassen. Entsprechende Pyridin-N-Oxide sind über eine Oxidation der entsprechenden Pyridine zugänglich. Geeignete Oxidationsmethoden sind beispielsweise in Houben-Weyl, Methoden der organischen Chemie, Erweiterungs- und Folgebände zur 4. Auflage, Band E 7b, S. 565 f. beschrieben.

Als Komponente (B) bevorzugt sind jeweils für sich genommen:

- 4-Amino-3-chlor-6-(4-chlor-2-fluor-3-methoxyphenyl)pyridin-2-carbonsäure (B1.0)
- 4-Amino-3-chlor-6-(4-chlor-2-fluor-3-methoxyphenyl)pyridin-2-carbonsäure - methylester (B1.1)
- 4-Amino-3-chlor-6-(4-chlor-2-fluor-3-methoxyphenyl)pyridin-2-carbonsäure - ethylester (B1.2)
- 4-Amino-3-chlor-6-(4-chlor-2-fluor-3-methoxyphenyl)pyridin-2-carbonsäure-n-propylester (B1.3)
- 4-Amino-3-chlor-6-(4-chlor-2-fluor-3-methoxyphenyl)pyridin-2-carbonsäure-i-propylester (B1.4)
- 4-Amino-3-chlor-6-(4-chlor-2-fluor-3-methoxyphenyl)pyridin-2-carbonsäure-n-butylester (B1.5)
- 4-Amino-3-chlor-6-(4-chlor-2-fluor-3-methoxyphenyl)pyridin-2-carbonsäure-2-butylester (B1.6)
- 4-Amino-3-chlor-6-(4-chlor-2-fluor-3-methoxyphenyl)pyridin-2-carbonsäure-tert-butylester (B1.7)
- 4-Amino-3-chlor-6-(4-chlor-2-fluor-3-methoxyphenyl)pyridin-2-carbonsäure-allylester (B1.8)
- 4-Amino-3-chlor-6-(4-chlor-2-fluor-3-methoxyphenyl)pyridin-2-carbonsäure-2-butoxy-ethylester (B1.9)
- 4-Amino-3-chlor-6-(4-chlor-2-fluor-3-methoxyphenyl)pyridin-2-carbonsäure-triethylammoniumsalz (B1.10)
- 4-Amino-3-chlor-6-(4-chlor-2-fluor-3-methoxyphenyl)pyridin-2-carbonsäure-Kaliumsalz (B1.11)
- 6-Amino-5-chlor-2-(4-chlor-2-fluor-3-methoxyphenyl)pyrimidin-4-carbonsäure (B1.12)
- 6-Amino-5-chlor-2-(4-chlor-2-fluor-3-methoxyphenyl)pyrimidin-4-carbonsäure - methylester (B1.13)
- 6-Amino-5-chlor-2-(4-chlor-2-fluor-3-methoxyphenyl)pyrimidin-4-carbonsäure - ethylester (B1.14)
- 6-Amino-5-chlor-2-(4-chlor-2-fluor-3-methoxyphenyl)pyrimidin-4-carbonsäure-n-propylester (B1.15)
- 6-Amino-5-chlor-2-(4-chlor-2-fluor-3-methoxyphenyl)pyrimidin-4-carbonsäure-i-propylester (B1.16)
- 6-Amino-5-chlor-2-(4-chlor-2-fluor-3-methoxyphenyl)pyrimidin-4-carbonsäure-n-butylester (B1.17)
- 6-Amino-5-chlor-2-(4-chlor-2-fluor-3-methoxyphenyl)pyrimidin-4-carbonsäure-2-butylester (B1.18)
- 6-Amino-5-chlor-2-(4-chlor-2-fluor-3-methoxyphenyl)pyrimidin-4-carbonsäure-tert-butylester (B1.19)
- 6-Amino-5-chlor-2-(4-chlor-2-fluor-3-methoxyphenyl)pyrimidin-4-carbonsäure-allylester (B1.20)
- 6-Amino-5-chlor-2-(4-chlor-2-fluor-3-methoxyphenyl)pyrimidin-4-carbonsäure-2-butoxy-ethylester (B1.21)
- 6-Amino-5-chlor-2-(4-chlor-2-fluor-3-methoxyphenyl)pyrimidin-4-carbonsäure-triethylammoniumsalz (B1.22)
- 6-Amino-5-chlor-2-(4-chlor-2-fluor-3-methoxyphenyl)pyrimidin-4-carbonsäure-Kaliumsalz (B1.23)

Besonders bevorzugt sind als Komponenten (B)

- 4-Amino-3-chlor-6-(4-chlor-2-fluor-3-methoxyphenyl)pyridin-2-carbonsäure (B1.0) und

- 4-Amino-3-chlor-6-(4-chlor-2-fluor-3-methoxyphenyl)pyridin-2-carbonsäure - methylester (B1.1)

In einer anderen Ausführungsform besonders bevorzugt sind als Komponenten (B)

- 6-Amino-5-chlor-2-(4-chlor-2-fluor-3-methoxyphenyl)pyrimidin-4-carbonsäure (B1.12) und

- 6-Amino-5-chlor-2-(4-chlor-2-fluor-3-methoxyphenyl)pyrimidin-4-carbonsäure - methylester (B1.13)

Die synergistischen Wirkungen werden bei gemeinsamer Ausbringung der Wirkstoffe (A) und (B) beobachtet, können jedoch auch bei zeitlich getrennter Anwendung (Splitting) festgestellt werden. Möglich ist auch die Anwendung der Herbizide oder der Herbizid-Kombinationen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die simultane Anwendung der Wirkstoffe der jeweiligen Kombination, gegebenenfalls in mehreren Portionen. Aber auch die zeitversetzte Anwendung der Einzelwirkstoffe einer Kombination ist möglich und kann im Einzelfall vorteilhaft sein. In diese Systemanwendung können auch andere Pflanzenschutzmittel wie Fungizide, Insektizide, Akarizide etc. und/oder verschiedene Hilfsstoffe, Adjuvantien und/oder Düngergaben integriert werden.

Die synergistischen Effekte erlauben eine Reduktion der Aufwandmengen der Einzelwirkstoffe, eine höhere Wirkungsstärke gegenüber derselben Schadpflanzenart bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Beispielsweise werden durch die erfindungsgemäßen Kombinationen aus (A)+(B) synergistische Wirkungssteigerungen möglich, die weit und in unerwarteter Weise über die Wirkungen hinausgehen, die mit den Einzelwirkstoffen (A) und (B) erreicht werden.

Erfindungsgemäß werden Herbizid-Kombinationen bereitgestellt, die in toleranten Soja- und Leguminosenarten besonders günstig eingesetzt werden können.

Die genannten Herbizide (A1.1) bis (A1.3) werden über die grünen Teile der Pflanzen aufgenommen und sind als Breitspektrum-Herbizide oder Totalherbizide bekannt; sie sind Hemmstoffe des Enzyms Glutaminsynthetase in Pflanzen; siehe "The Pesticide Manual" 11th Edition, British Crop Protection Council 1997, S. 643-645 bzw. 120-121.

In den erfindungsgemäßen Kombinationen benötigt man in der Regel vom Wirkstoff (A) am Beispiel des Racemats von Glufosinate eine Aufwandmenge im Bereich von 12,5 bis 2500 g AS/ha (=Gramm Aktivsubstanz pro Hektar), vorzugsweise 25 bis 2500 g AS/ha, besonders bevorzugt 50 - 1500 g AS/ha. Entsprechende in Mol pro Hektar umgerechnete Mengen gelten auch für (A1.1), (A1.2) und (A1.3).

Die Kombinationen werden zweckmäßig in Soja- und Leguminosenarten eingesetzt, die gegenüber den Verbindungen (A1) tolerant sind. Die Toleranz kann dabei durch Züchtung oder Mutationsselektion erzeugt worden sein, oder auch durch gentechnische Verfahren. Einige tolerante Sojakulturen, die gentechnisch erzeugt wurden, sind bereits bekannt und werden in der Praxis eingesetzt, vgl. Artikel in der Zeitschrift "Zuckerrübe" 47. Jahrgang (1998), S. 217 ff.; zur Herstellung transgener Pflanzen, die gegen Glufosinate resistent sind, vgl. EP-A-0 242 246, EP-A-0 242 236, EP-A-0 257 542, EP-A-0 275 957, EP-A-0 513 054).

Leguminosen (Hülsenfrüchte) sind beispielsweise ausgewählt aus der Gruppe bestehend aus Erbsen, wie z.B. Ackererbse (Pisum sativum L. convar. Speciosum, Palerbsen (Pisum sativum L. convar. sativum), Markerbsen (Pisum sativum L. convar. Medullar, Alef und Zuckererbsen (Pisum sativum L. convar. axiphium Alef.); Kichererbsen, wie z.B. Cicer arietinum fo. Album, Cicer arietinum fo. Fuscum, Cicer arietinum fo. Macrospermum, Cicer arietinum fo.; Bohnen, wie z.B. Mattenbohne (Vigna aconitifolia), Adzukibohne (Vigna angulari), Urdbohne (Vigna mungo), Mungbohne (Vigna radiata), Bambara-Erdnuss (Vigna subterranea), Reisbohne (Vigna umbellata), Catjang-Bohne (Vigna unguiculata subsp. cylindrica (L.) Spargelbohne (Vigna unguiculata subsp. sesquipedalis), Augenbohne (Vigna unguiculata (L.) Walp. subsp. unguiculata), Guarbohne (Cyamopsis tetragonolobus )(L.) Taub., Gartenbohne (Phaseolus vulgaris L.), Limabohne, Mondbohne (Phaseolus lunatus L.), Teparybohne (Phaseolus acutifolius) Feuerbohne (Phaseolus coccineus L.), Ackerbohne (Vicia faba); und Linsen, wie z.B. Tellerlinsen, Rote Linsen , Berglinsen, Beluga-Linsen, Puy-Linsen -und Gelbe Linsen.

Die Aufwandmengen der Herbizide (B) können stark variieren. Zweckmäßig sind folgende Bereiche:

Im Allgemeinen 2,5 - 500 g AS/ha, bevorzugt 4 bis 400 g AS/ha, besonders bevorzugt 5 - 250 AS/ha (vgl. die

Angaben zur Gruppe der Verbindungen (A)

Die Mengenverhältnisse der Verbindungen (A) und (B) ergeben sich aus den genannten Aufwandmengen für die Einzelstoffe.

Von besonderem Interesse ist die Verwendung jeder einzelnen der nachfolgend tabellarisch aufgeführten Kombinationen.

Tabelle 1

| Nr. | Wirkstoff (A) | Wirkstoff (B) |
|---|---|---|
| 1 | A1.1 | B1.0 |
| 2 | A1.1 | B1.1 |
| 3 | A1.1 | B1.2 |
| 4 | A1.1 | B1.3 |
| 5 | A1.1 | B1.4 |
| 6 | A1.1 | B1.5 |
| 7 | A1.1 | B1.6 |
| 8 | A1.1 | B1.7 |
| 9 | A1.1 | B1.8 |
| 10 | A1.1 | B1.9 |
| 11 | A1.1 | B1.10 |
| 12 | A1.1 | B1.11 |
| 13 | A1.1 | B1.12 |
| 14 | A1.1 | B1.13 |
| 15 | A1.1 | B1.14 |
| 16 | A1.1 | B1.15 |
| 17 | A1.1 | B1.16 |
| 18 | A1.1 | B1.17 |
| 19 | A1.1 | B1.18 |
| 20 | A1.1 | B1.19 |
| 21 | A1.1 | B1.20 |
| 22 | A1.1 | B1.21 |
| 23 | A1.1 | B1.22 |
| 24 | A1.1 | B1.23 |
| 25 | A1.2 | B1.0 |
| 26 | A1.2 | B1.1 |
| 27 | A1.2 | B1.2 |
| 28 | A1.2 | B1.3 |
| 29 | A1.2 | B1.4 |
| 30 | A1.2 | B1.5 |
| 31 | A1.2 | B1.6 |
| 32 | A1.2 | B1.7 |
| 33 | A1.2 | B1.8 |

(fortgesetzt)

| Nr. | Wirkstoff (A) | Wirkstoff (B) |
|---|---|---|
| 34 | A1.2 | B1.9 |
| 35 | A1.2 | B1.10 |
| 36 | A1.2 | B1.11 |
| 37 | A1.2 | B1.12 |
| 38 | A1.2 | B1.13 |
| 39 | A1.2 | B1.14 |
| 40 | A1.2 | B1.15 |
| 41 | A1.2 | B1.16 |
| 42 | A1.2 | B1.17 |
| 43 | A1.2 | B1.18 |
| 44 | A1.2 | B1.19 |
| 45 | A1.2 | B1.20 |
| 46 | A1.2 | B1.21 |
| 47 | A1.2 | B1.22 |
| 48 | A1.2 | B1.23 |
| 49 | A1.3 | B1.0 |
| 50 | A1.3 | B1.1 |
| 51 | A1.3 | B1.2 |
| 52 | A1.3 | B1.3 |
| 53 | A1.3 | B1.4 |
| 54 | A1.3 | B1.5 |
| 55 | A1.3 | B1.6 |
| 56 | A1.3 | B1.7 |
| 57 | A1.3 | B1.8 |
| 58 | A1.3 | B1.9 |
| 59 | A1.3 | B1.10 |
| 60 | A1.3 | B1.11 |
| 61 | A1.3 | B1.12 |
| 62 | A1.3 | B1.13 |
| 63 | A1.3 | B1.14 |
| 64 | A1.3 | B1.15 |
| 65 | A1.3 | B1.16 |
| 66 | A1.3 | B1.17 |
| 67 | A1.3 | B1.18 |
| 68 | A1.3 | B1.19 |
| 69 | A1.3 | B1.20 |
| 70 | A1.3 | B1.21 |
| 71 | A1.3 | B1.22 |

(fortgesetzt)

| Nr. | Wirkstoff (A) | Wirkstoff (B) |
|---|---|---|
| 72 | A1.3 | B1.23 |

In Einzelfällen kann es sinnvoll sein, eine oder mehrere der Verbindungen (A) mit mehreren Verbindungen (B) zu kombinieren.

Weiterhin können die erfindungsgemäßen Kombinationen zusammen mit anderen Wirkstoffen beispielsweise aus der Gruppe der Fungizide, Insektizide und Pflanzenwachstumsregulatoren oder aus der Gruppe der im Pflanzenschutz üblichen Zusatzstoffe und Formulierungshilfsmittel eingesetzt werden. Zusatzstoffe sind beispielsweise Düngemittel, Farbstoffe, Öle und ionische/nichtionische Netzmittel.

Dabei sind auch solche Kombinationen erfindungsgemäß, die noch ein oder mehrere weitere Wirkstoffe anderer Struktur [Wirkstoffe (C)], z.B. Safener, Pflanzenwachstumsregulatoren oder weitere Herbizide, enthalten. Für Kombinationen der letztgenannten Art mit drei oder mehr Wirkstoffen gelten die für erfindungsgemäße Zweierkombinationen erläuterten bevorzugten Bedingungen in erster Linie ebenfalls, sofern darin die erfindungsgemäßen Zweierkombinationen enthalten sind und bezüglich der betreffenden Zweierkombination. Insofern die Soja- und Leguminosenarten nicht naturgemäß eine Toleranz gegen den Wirkstoff (C) aufweisen, muss eine solche durch Mutationsselektion, Züchtung oder gentechnisch erzeugt werden, um erfindungsgemäße Verwendungen zu ermöglichen.

Als Wirkstoff (C) sind z.B. die Safener Benoxacor, Cloquintocet (-mexyl), Cyometrinil, Cyprosulfamide, Dichlormid, Fenchlorazole (-ethyl), Fenclorim, Flurazole, Fluxofenim, Furilazole, Isoxadifen (-ethyl), Mefenpyr (-diethyl), Naphthalic anhydride, Oxabetrinil, "AD-67" oder "MON 4660" (= 3-Dichloracetyl-1-oxa-3-aza-spiro[4,5]decan), "TI-35" (= 1-Dichloracetyl-azepan), "Dimepiperate" oder "MY-93" (= Piperidin-1-thiocarbonsäure-S-1-methyl-1-phenylethylester), "Daimuron" oder "SK 23" (= 1-(1-Methyl-1-phenylethyl)-3-p-tolyl-harnstoff) oder "Cumyluron" = "JC-940" (= 3-(2-Chlorphenylmethyl)-1-(1-methyl-1-phenyl-ethyl)harnstoff) oder die folgenden Herbizide bzw. Pflanzenwachstumsregulatoren geeignet:

Acetochlor, Acibenzolar, Acibenzolar-S-methyl, Acifluorfen, Acifluorfen-sodium, Aclonifen, Alachlor, Allidochlor, Alloxydim, Alloxydim-sodium, Ametryn, Amicarbazone, Amidochlor, Amidosulfuron, Aminocyclopyrachlor, Aminopyralid, Amitrole, Ammoniumsulfamat, Ancymidol, Anilofos, Asulam, Atrazine, Azafenidin, Azimsulfuron, Aziprotryn, Beflubutamid, Benazolin, Benazolin-ethyl, Bencarbazone, Benfluralin, Benfuresate, Bensulide, Bensulfuron, Bensulfuron-methyl, Bentazone, Benzfendizone, Benzobicyclon, Benzofenap, Benzofluor, Benzoylprop, Bicyclopyrone, Bifenox, Bispyribac, Bispyribac-natrium, Bromacil, Bromobutide, Bromofenoxim, Bromoxynil, Bromuron, Buminafos, Busoxinone, Butachlor, Butafenacil, Butamifos, Butenachlor, Butralin, Butroxydim, Butylate, Cafenstrole, Carbetamide, Carfentrazone, Carfentrazone-ethyl, Chlomethoxyfen, Chloramben, Chlorazifop, Chlorazifop-butyl, Chlorbromuron, Chlorbufam, Chlorfenac, Chlorfenac-natrium, Chlorfenprop, Chlorflurenol, Chlorflurenol-methyl, Chloridazon, Chlorimuron, Chlorimuron-ethyl, Chlormequat-chlorid, Chlornitrofen, Chlorophthalim, Chlorthal-dimethyl, Chlorotoluron, Chlorsulfuron, Cinidon, Cinidon-ethyl, Cinmethylin, Cinosulfuron, Clethodim, Clodinafop, Clodinafop-propargyl, Clofencet, Clomazone, Clomeprop, Cloprop, Clopyralid, Cloransulam, Cloransulam-methyl, Cumyluron, Cyanamide, Cyanazine, Cyclanilide, Cycloate, Cyclosulfamuron, Cycloxydim, Cycluron, Cyhalofop, Cyhalofopbutyl, Cyperquat, Cyprazine, Cyprazole, 2,4-D, 2,4-DB, Daimuron/Dymron, Dalapon, Daminozide, Dazomet, n-Decanol, Desmedipham, Desmetryn, Detosyl-Pyrazolate (DTP), Diallate, Dicamba, Dichlobenil, Dichlorprop, Dichlorprop-P, Diclofop, Diclofopmethyl, Diclofop-P-methyl, Diclosulam, Diethatyl, Diethatyl-ethyl, Difenoxuron, Difenzoquat, Diflufenican, Diflufenzopyr, Diflufenzopyr-natrium, Dimefuron, Dikegulacsodium, Dimefuron, Dimepiperate, Dimethachlor, Dimethametryn, Dimethenamid, Dimethenamid-P, Dimethipin, Dimetrasulfuron, Dinitramine, Dinoseb, Dinoterb, Diphenamid, Dipropetryn, Diquat, Diquat-dibromide, Dithiopyr, Diuron, DNOC, Eglinazine-ethyl, Endothal, EPTC, Esprocarb, Ethalfluralin, Ethametsulfuron, Ethametsulfuron-methyl, Ethephon, Ethidimuron, Ethiozin, Ethofumesate, Ethoxyfen, Ethoxyfen-ethyl, Ethoxysulfuron, Etobenzanid, F-5331, d.h. N-[2-Chlor-4-fluor-5-[4-(3-fluorpropyl)-4,5-dihydro-5-oxo-1H-tetrazol-1-yl]-phenyl]-ethansulfonamid, F-7967, d. h. 3-[7-Chlor-5-fluor-2-(trifluormethyl)-1H-benzimidazol-4-yl]-1-methyl-6-(trifluormethyl)pyrimidin-2,4(1H,3H)-dion, Fenoprop, Fenoxaprop, Fenoxaprop-P, Fenoxaprop-ethyl, Fenoxaprop-P-ethyl, Fenoxasulfone, Fentrazamide, Fenuron, Flamprop, Flamprop-M-isopropyl, Flamprop-M-methyl, Flazasulfuron, Florasulam, Fluazifop, Fluazifop-P, Fluazifop-butyl, Fluazifop-P-butyl, Fluazolate, Flucarbazone, Flucarbazone-sodium, Flucetosulfuron, Fluchloralin, Flufenacet (Thiafluamide), Flufenpyr, Flufenpyr-ethyl, Flumetralin, Flumetsulam, Flumiclorac, Flumiclorac-pentyl, Flumioxazin, Flumipropyn, Fluometuron, Fluorodifen, Fluoroglycofen, Fluoroglycofenethyl, Flupoxam, Flupropacil, Flupropanate, Flupyrsulfuron, Flupyrsulfuron-methylsodium, Flurenol, Flurenol-butyl, Fluridone, Flurochloridone, Fluroxypyr, Fluroxypyrmeptyl, Flurprimidol, Flurtamone, Fluthiacet, Fluthiacet-methyl, Fluthiamide, Fomesafen, Foramsulfuron, Forchlorfenuron, Fosamine, Furyloxyfen, Gibberellinsäure, Glyphosate, Glyphosate-diammonium, Glyphosate-isopropylammonium, Glyphosate-Kalium, H-9201 , d. h. O-(2,4-Dimethyl-6-nitrophenyl)-O-ethyl-isopropylphosphor-amidothioat, Halosafen, Halosulfuron, Halosulfuron-methyl, Haloxyfop, Haloxyfop-P, Haloxyfop-ethoxyethyl, Haloxyfop-P-ethoxyethyl, Haloxyfop-methyl, Haloxyfop-P-methyl, Hexazinone, HW-02, d. h. 1-(Dimethoxyphosphoryl)-ethyl(2,4-dichlorphenoxy) acetat, Imazamethabenz, Imazamethabenz-methyl, Imazamox, Imazamox-ammonium, Imazapic, Imazapyr, Imazapyr-isopropylammonium, Imazaquin, Imazaquin-ammonium, Imazethapyr, Imazethapyr-ammonium, Imazosulfuron, Inabenfide, Indanofan, Indaziflam, Indolessigsäure (IAA), 4-Indol-3-ylbuttersäure (IBA), Iodosulfuron, Iodosulfuron-methyl-natrium, Ioxynil, Ipfencarbazone, Isocarbamid, Isopropalin, Isoproturon, Isouron, Isoxaben, Isoxachlortole, Isoxaflutole, Isoxapyrifop, KUH-0 4 3 , d. h. 3-({[5-(Difluormethyl)-1-methyl-3-(trifluormethyl)-1H-pyrazol-4-yl] methyl}sulfonyl)-5,5-dimethyl-4,5-dihydro-1,2-oxazol, Karbutilate, Ketospiradox, Lactofen, Lenacil, Linuron, Maleinsäurehydrazid, MCPA, MCPB, MCPB-methyl, -ethyl und -natrium, Mecoprop, Mecoprop-natrium, Mecoprop-butotyl, Mecoprop-P-butotyl, Mecoprop-P-dimethylammonium, Mecoprop-P-2-ethylhexyl, Mecoprop-P-kalium, Mefenacet, Mefluidide, Mepiquat-chlorid, Mesosulfuron, Mesosulfuron-methyl, Mesotrione, Methabenzthiazuron, Metam, Metamifop, Metamitron, Metazachlor, Metazasulfuron, Methazole, Methiopyrsulfuron, Methiozolin, Methoxyphenone, Methyldymron, 1-Methylcyclopropen, Methylisothiocyanat, Metobenzuron, Metobromuron, Metolachlor, S-Metolachlor, Metosulam, Metoxuron, Metribuzin, Metsulfuron, Metsulfuron-methyl, Molinate, Monalide, Monocarbamide, Monocarbamide-dihydrogensulfat, Monolinuron, Monosulfuron, Monosulfuron-ester, Monuron, MT-128, d. h. 6-Chlor-N-[(2E)-3-chlorprop-2-en-1-yl]-5-methyl-N-phenylpyridazin-3-amin, MT-5950, d. h. N-[3-Chlor-4-(1-methylethyl)-phenyl]-2-methylpentanamid, NGGC-011, Naproanilide, Napropamide, Naptalam, NC-310, d.h. 4-(2,4-Dichlorobenzoyl)-1-methyl-5-benzyloxypyrazole, Neburon, Nicosulfuron, Nipyraclofen, Nitralin, Nitrofen, Nitrophenolatnatrium (Isomerengemisch), Nitrofluorfen, Nonansäure, Norflurazon, Orbencarb, Orthosulfamuron, Oryzalin, Oxadiargyl, Oxadiazon, Oxasulfuron, Oxaziclomefone, Oxyfluorfen, Paclobutrazol, Paraquat, Paraquat-dichlorid, Pelargonsäure (Nonansäure), Pendimethalin, Pendralin, Penoxsulam, Pentanochlor, Pentoxazone, Perfluidone, Pethoxamid, Phenisopham, Phenmedipham, Phenmedipham-ethyl, Picloram, Picolinafen, Pinoxaden, Piperophos, Pirifenop, Pirifenop-butyl, Pretilachlor, Primisulfuron, Primisulfuron-methyl, Probenazole, Profluazol, Procyazine, Prodiamine, Prifluraline, Profoxydim, Prohexadione, Prohexadione-calcium, Prohydrojasmone, Prometon, Prometryn, Propachlor, Propanil, Propaquizafop, Propazine, Propham, Propisochlor, Propoxycarbazone, Propoxycarbazone-natrium, Propyrisulfuron, Propyzamide, Prosulfalin, Prosulfocarb, Prosulfuron, Prynachlor, Pyraclonil, Pyraflufen, Pyraflufenethyl, Pyrasulfotole, Pyrazolynate (Pyrazolate), Pyrazosulfon (KIH 485), Pyrazosulfuron-ethyl, Pyrazoxyfen, Pyribambenz, Pyribambenz-isopropyl, Pyribambenz-propyl, Pyribenzoxim, Pyributicarb, Pyridafol, Pyridate, Pyriftalid, Pyriminobac, Pyriminobac-methyl, Pyrimisulfan, Pyrithiobac, Pyrithiobac-natrium, Pyroxasulfone, Pyroxsulam, Quinclorac, Quinmerac, Quinoclamine, Quizalofop, Quizalofop-ethyl, Quizalofop-P, Quizalofop-P-ethyl, Quizalofop-P-tefuryl, Rimsulfuron, Saflufenacil, Secbumeton, Sethoxydim, Siduron, Simazine, Simetryn, SN-106279, d. h. Methyl-(2R)-2-({7-[2-chlor-4-(trifluormethyl)phenoxy]-2-naphthyl}oxy)propanoat, Sulcotrione, Sulfallate (CDEC), Sulfentrazone, Sulfometuron, Sulfometuron-methyl, Sulfosate (Glyphosate-trimesium), Sulfosulfuron, SYN-523, SYP-249, d. h. 1-Ethoxy-3-methyl-1-oxobut-3-en-2-yl-5-[2-chlor-4-(trifluormethyl)phenoxy]-2-nitrobenzoat, SYP-300, d. h. 1-[7-Fluor-3-oxo-4-(prop-2-in-1-yl)-3,4-dihydro-2H-1,4-benzoxazin-6-yl]-3-propyl-2-thioxoimidazolidin-4,5-dion, Tebutam, Tebuthiuron, Tecnazene, Tefuryltrione, Tembotrione, Tepraloxydim, Terbacil, Terbucarb, Terbuchlor, Terbumeton, Terbuthylazine, Terbutryn, Thenylchlor, Thiafluamide, Thiazafluron, Thiazopyr, Thidiazimin, Thidiazuron, Thiencarbazone, Thiencarbazone-methyl, Thifensulfuron, Thifensulfuron-methyl, Thiobencarb, Tiocarbazil, Topramezone, Tralkoxydim, Triallate, Triasulfuron, Triaziflam, Triazofenamide, Tribenuron, Tribenuron-methyl, Trichloressigsäure (TCA), Triclopyr, Tridiphane, Trietazine, Trifloxysulfuron, Trifloxysulfuron-natrium, Trifluralin, Triflusulfuron, Triflusulfuron-methyl, Trimeturon, Trinexapac, Trinexapac-ethyl, Tritosulfuron, Tsitodef, Uniconazole, Uniconazole-P, Vernolate, ZJ-0862, d. h. 3,4-Dichlor-N-{2-[(4,6-dimethoxypyrimidin-2-yl)oxy]benzyl}-anilin, sowie die folgenden Verbindungen:

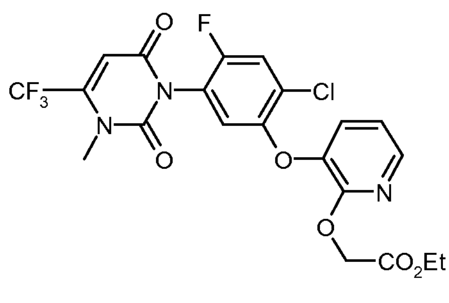

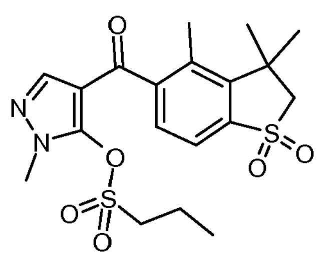

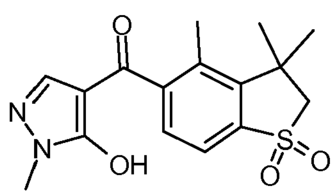

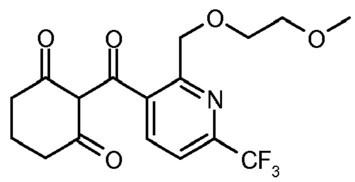

Im Fall von HPPD-Inhibitor toleranten Soja-, Leguminosenarten können auch HPPD Inibitoren, wie z.B. Mesotrione, Sulcotrione Bicyclopyrone, Pyrasulfutole, Tembotrione/ Topramezone oder Isoxaflutole als Wirkstoffe (C) zugesetzt werden.
Als Wirkstoff (C) besonders geeignet sind

(C1) selektiv in Soja gegen monokotyle und überwiegend dikotyle Schadpflanzen wirksamen Herbiziden mit Blattwirkung und/oder Bodenwirkung (Residualwirkung) wie

(C1.1) Trifluralin (Pesticide Manual (PM), S. 1248-1250) (250 bis 5000 g AS/ha, insbesondere 400 bis 4000 g AS/ha),
(C1.2) Metribuzin (PM, S. 840-841) (250 bis 4000 g AS/ha, insbesondere 500 bis 3000 g AS/ha),
(C1.3) Clomazone (PM, S. 256-257) (150 bis 5000 g AS/ha, insbesondere 200 bis 3000 g AS/ha),
(C1.4) Pendimethalin (PM, S. 937-939) (250 bis 4000 g AS/ha, insbesondere 500 bis 3000 g AS/ha),
(C1.5) Metolachlor (PM, S. 833-834) auch in der optisch aktiven Form S-Metolachlor (100 bis 5000 g AS/ha, insbesondere 200 bis 4000 g AS/ha),
(C1.6) Flumetsulam (PM, S. 573-574) (5 bis 300 g AS/ha, insbesondere 10 bis 100 g AS/ha),
(C1.7) Dimethenamid (CAS RN: 87674-68-8)/ Dimethenamid-p (CAS RN: 163515-14-8)(PM, S. 409-410) (20 bis 5000 g AS/ha, insbesondere 50 bis 4000 g AS/ha),
(C1.8) Alachlor (PM, S. 23-24) (250 bis 5000 g AS/ha, insbesondere 500 bis 4000 g AS/ha),
(C1.9) Linuron (PM, S. 751-753) (250 bis 5000 g AS/ha, insbesondere 500 bis 4000 g AS/ha),
(C1.10) Sulfentrazone (PM, S. 1126-1127) (50 bis 2000 g AS/ha, insbesondere 70 bis 1500 g AS/ha),
(C1.11) Ethalfluralin (PM, S. 473-474) (250 bis 5000 g AS/ha, insbesondere 500 bis 4000 g AS/ha),
(C1.12) Fluthiamide (BAY FOE 5043, Flufenacet) (PM, S. 82-83) (50 bis 5000 g AS/ha, insbesondere 70 bis 4000 g AS/ha),
(C1.13) Norflurazon (PM, S. 886-888), (500 bis 5000 g AS/ha, insbesondere 750 bis 4000 g AS/ha),
(C1.14) Vernolate (PM, S. 1264-1266), (250 bis 5000 g AS/ha, insbesondere 500 bis 4000 g AS/ha) und/oder gegebenenfalls
(C1.15) Flumioxazin (PM, S. 576-577), (10 bis 500 g AS/ha, insbesondere 20 bis 400 g AS/ha) und/oder
(C1.16) Imazapyr (CAS RN: 81334-34-1) auch als Imazapyr-isopropylammonium (50 bis 5000 g AS/ha, insbesondere 80 bis 3000 g AS/ha),
(C1.17) Imazamox (CAS RN: 114311-32-9) auch als Imazamox-ammonium (1 bis 150 g AS/ha, insbesondere 2 bis 100 g AS/ha),
(C1.18) Imazaquin (CAS RN: 81335-37-7)auch als Imazaquin-ammonium (2 bis 300 g AS/ha, insbesondere 4 bis 200 g AS/ha) und/oder
(C.1.19) Diflufenzopyr (CAS RN: 109293-97-2); (10 bis 400 g AS/ha, insbesondere 20 bis 300 g AS/ha),
(C.1.20) Carfentrazone (CAS RN: 128621-72-7); (1 bis 100 g AS/ha, insbesondere 3 bis 80 g AS/ha);
(C.1.21) Imazethapyr (CAS RN: 81335-77-5)/ Imazethapyr-ammonium (5 bis 300 g AS/ha, insbesondere 10 bis 200 g AS/ha);
(C.1.22) Dicamba (CAS RN: 1918-00-9);(10 bis 800 g AS/ha, insbesondere 20 bis 600 g AS/ha)
(C.1.23) Mesotrione (CAS RN: 104206-82-8); (5 bis 500 g AS/ha, insbesondere 10 bis 300 g AS/ha)(C. 1.24) Bicyclopyrone (CAS RN: 352010-68-5); (5 bis 500 g AS/ha, insbesondere 10 bis 300 g AS/ha)
(C.1.26) Pyrasulfutole (CAS RN: 365400-11-9); (3 bis 300 g AS/ha, insbesondere 5 bis 200 g AS/ha)
(C.1.27) Tembotrione (CAS RN: 335104-84-2); (5 bis 500 g AS/ha, insbesondere 10 bis 300 g AS/ha)
(C.1.28) Isoxaflutole (CAS RN: 141112-29-0) ; (5 bis 500 g AS/ha, insbesondere 10 bi9s 300 g AS/ha)
(C.1.29) Sulcotrione (CAS RN: 99105-77-8); (20 bis 1000 g AS/ha, insbesondere 30 bis 800 g AS/ha)
(C.1.30) Topramezone (CAS RN: 210631-68-8); (1 bis 300 g AS/ha, insbesondere 2 bis 200 g AS/ha)

(C2)selektiv in Soja gegen dikotyle Schadpflanzen wirksamen Herbiziden, beispielsweise

(C2.1) Chlortoluron, Chlorotoluron (PM, S. 229-231) (250 bis 5000 g AS/ha, insbesondere 500 bis 4000 g AS/ha),

(C2.2) Bentazone (PM, S. 109-111) (250 bis 5000 g AS/ha, insbesondere 500 bis 4000 g AS/ha),
(C2.3) Thifensulfuron und dessen Ester, insbesondere der Methylester (PM, S.1188-1190) (1 bis 120 g AS/ha, insbesondere 2 bis 90 g AS/ha),
(C2.4) Oxyfluorfen (PM, S. 919-921) (40 bis 800 g AS/ha, insbesondere 60 bis 600 g AS/ha),
(C2.5) Lactofen (PM, S. 747-748) (20 bis 400 g AS/ha, insbesondere 30 bis 300 g AS/ha),
(C2.6) Fomesafen (PM, S. 616-618) (250 bis 5000 g AS/ha, insbesondere 500 bis 4000 g AS/ha),
(C2.7) Flumiclorac (PM, S. 575-576) und dessen Ester wie der Pentylester (10 bis 400 g AS/ha, insbesondere 20 bis 300 g AS/ha),
(C2.8) Acifluorfen und dessen Natriumsalz (PM, S. 12-14) (40 bis 800 g AS/ha, insbesondere 60 bis 600 g AS/ha),
(C2.9) 2,4-DB (PM, S. 337-339 und dessen Ester und Salze (250 bis 5000 g AS/ha, insbesondere 500 bis 4000 g AS/ha) und/oder
(C2.10) 2,4-D (PM, S. 323-327) und dessen Ester und Salze (250 bis 5000 g AS/ha, insbesondere 500 bis 4000 g AS/ha) und/oder gegebenenfalls
(C2.11) Chlorimuron und Salze und Ester wie Chlorimuron-ethyl (PM, S. 217-218) (200 bis 4000 g AS/ha, insbesondere 500 bis 3000 g AS/ha),
(C2.12) Cloransulam und dessen Salze und Ester wie Cloransulam-methyl (PM, S. 265) (1 bis 150 g AS/ha, insbesondere 3 bis 120 g AS/ha),
(C2.13) Diclosulam (vgl. AG CHEM New Compound Review, Vol. 17, (1999) Seite 37, Triazolopyrimidin-sulfonanilid-Herbizid) (5 bis 150 g AS/ha, insbesondere 10-20 g AS/ha),
(C2.14) Fluthiacet und dessen Salze und Ester wie Fluthiacet-methyl (KIH-9201; PM, S. 606-608) (1-50 g AS/ha, insbesondere 2-40 g AS/ha) und/oder
(C2.15) Oxasulfuron (PM, S. 911-912) (10-300 g AS/ha, insbesondere 20-200 g AS/ha) und/oder

(C3) selektiv in Soja gegen monokotyle Schadpflanzen wirksamen Herbiziden mit Blatt- und Bodenwirkung, beispielsweise Cyclohexandione aus der Gruppe

(C3.1) Sethoxydim (PM, S. 1101-1103) (50 bis 3000 g AS/ha, insbesondere 100 bis 2000 g AS/ha),
(C3.2) Cycloxydim (PM, S. 290-291) (10 bis 1000 g AS/ha, insbesondere 30 bis 800 g AS/ha) und
(C3.3) Clethodim (PM, S. 250-251) (10 bis 800 g AS/ha, insbesondere 20 bis 600 g AS/ha) und/oder

(C4) selektiv in Soja gegen monokotyle Schadpflanzen wirksamen Herbiziden mit Blattwirkung, beispielsweise (Het) aryloxyphenoxyherbizide wie

(C4.1) Quizalofop-P und dessen Ester wie der Ethyl- oder Tefurylester (PM, S. 1089-1092), auch in der Form der Mischungen mit dem anderen optischen Isomer, z. B. das racemische Quizalofop und dessen Ester (10-300 g AS/ha, insbesondere 20-250 g AS/ha),
(C4.2) Fenoxaprop-P und dessen Ester wie der Ethylester (PM, S. 519-520) (10 bis 300 g AS/ha, insbesondere 20 bis 250 g AS/ha), auch in der Form der Mischungen mit dem anderen optischen Isomer, z. B. als racemisches Fenoxaprop-ethyl,
(C4.3) Fluazifop-P und dessen Ester wie der Butylester (PM, S. 556-557) (20 bis 1500 g AS/ha, insbesondere 30 bis 1200 g AS/ha), auch in der Form der Mischungen mit dem anderen optischen Isomer, z. B. als racemisches Fluazifop-butyl,
(C4.4) Haloxyfop und Haloxyfop-P und deren Ester wie der Methyl- oder der -etotylester (PM, S. 660-663) (10-300 g AS/ha, insbesondere 20 bis 250 g AS/ha) und/oder
(C4.5) Propaquizafop (PM, S. 1021-1022) (10-300 g AS/ha, insbesondere 20-250 g AS/ha) und/oder
(C5) nicht selektive, zu spezifischen Zwecken in Soja einsetzbare Herbizide, z. B.
(C5.1) Paraquat (Salze) wie das Paraquat-dichlorid (PM, S. 923-925) (250 bis 5000 g AS/ha, insbesondere 500 bis 4000 g AS/ha)

Tabelle 2

| Nr. | Wirkstoff (A) | Wirkstoff (B) | Wirkstoff (C) |
|---|---|---|---|
| 1 | A1.1 | B1.0 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 2 | A1.1 | B1.0 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 3 | A1.1 | B1.0 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15;C3.1, C3.2, C3.3; C4.1, C4.2, C4.3, C4.4, C4.5; C5.1 |
| 4 | A1.1 | B1.0 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 5 | A1.1 | B1.1 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 6 | A1.1 | B1.1 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 7 | A1.1 | B1.1 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 8 | A1.1 | B1.1 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 9 | A1.1 | B1.2 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 10 | A1.1 | B1.2 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 11 | A1.1 | B1.2 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 12 | A1.1 | B1.2 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 13 | A1.1 | B1.3 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 14 | A1.1 | B1.3 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 15 | A1.1 | B1.3 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 16 | A1.1 | B1.3 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 17 | A1.1 | B1.4 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 18 | A1.1 | B1.4 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 19 | A1.1 | B1.4 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 20 | A1.1 | B1.4 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 21 | A1.1 | B1.5 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 22 | A1.1 | B1.5 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 23 | A1.1 | B1.5 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, Cl.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 24 | A1.1 | B1.5 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 25 | A1.1 | B1.6 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 26 | A1.1 | B1.6 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 27 | A1.1 | B1.6 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 28 | A1.1 | B1.6 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 29 | A1.1 | B1.7 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 30 | A1.1 | B1.7 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 31 | A1.1 | B1.7 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 32 | A1.1 | B1.7 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 33 | A1.1 | B1.8 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 34 | A1.1 | B1.8 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 35 | A1.1 | B1.8 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 36 | A1.1 | B1.8 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 37 | A1.1 | B1.9 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 38 | A1.1 | B1.9 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 39 | A1.1 | B1.9 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 40 | A1.1 | B1.9 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 41 | A1.1 | B1.10 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 42 | A1.1 | B1.10 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 43 | A1.1 | B1.10 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , .C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 44 | A1.1 | B1.10 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 45 | A1.1 | B1.11 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 46 | A1.1 | B1.11 | C1.1, C1.2, C1.3, C1.4, C1.5, C1.6, C1.7, C1.8, Cl.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 47 | A1.1 | B1.11 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 48 | A1.1 | B1.11 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 49 | A1.1 | B1.12 | C1.1, Cl.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 50 | A1.1 | B1.12 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 51 | A1.1 | B1.12 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 52 | A1.1 | B1.12 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 53 | A1.1 | B1.13 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 54 | A1.1 | B1.13 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 55 | A1.1 | B1.13 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 56 | A1.1 | B1.13 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 57 | A1.1 | B1.14 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 58 | A1.1 | B1.14 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 59 | A1.1 | B1.14 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 60 | A1.1 | B1.14 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 61 | A1.1 | B1.15 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 62 | A1.1 | B1.15 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 63 | A1.1 | B1.15 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 64 | A1.1 | B1.15 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 65 | A1.1 | B1.16 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 66 | A1.1 | B1.16 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 67 | A1.1 | B1.16 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 68 | A1.1 | B1.16 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 69 | A1.1 | B1.17 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 70 | A1.1 | B1.17 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 71 | A1.1 | B1.17 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 72 | A1.1 | B1.17 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 73 | A1.1 | B1.18 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 74 | A1.1 | B1.18 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 75 | A1.1 | B1.18 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 76 | A1.1 | B1.18 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 77 | A1.1 | B1.19 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 78 | A1.1 | B1.19 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 79 | A1.1 | B1.19 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 80 | A1.1 | B1.19 | C1.1, Cl.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 81 | A1.1 | B1.20 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 82 | A1.1 | B1.20 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 83 | A1.1 | B1.20 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 84 | A1.1 | B1.20 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 85 | A1.1 | B1.21 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 86 | A1.1 | B1.21 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 87 | A1.1 | B1.21 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 88 | A1.1 | B1.21 | C1.1, C1.2, C1.3, C1.4, C1.5, C1.6, C1.7, C1.8, C1.9, C1.10,C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 89 | A1.1 | B1.22 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 90 | A1.1 | B1.22 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 91 | A1.1 | B1.22 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 92 | A1.1 | B1.22 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 93 | A1.1 | B1.23 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 94 | A1.1 | B1.23 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 95 | A1.1 | B1.23 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 96 | A1.1 | B1.23 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 97 | A1.2 | B1.0 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 98 | A1.2 | B1.0 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 99 | A1.2 | B1.0 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 100 | A1.2 | B1.0 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 101 | A1.2 | B1.1 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 102 | A1.2 | B1.1 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 103 | A1.2 | B1.1 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 104 | A1.2 | B1.1 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 105 | A1.2 | B1.2 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 106 | A1.2 | B1.2 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 107 | A1.2 | B1.2 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 108 | A1.2 | B1.2 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 109 | A1.2 | B1.3 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 110 | A1.2 | B1.3 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 111 | A1.2 | B1.3 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 112 | A1.2 | B1.3 | C1.1, C1.2, C1.3, C1.4, Cl.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 113 | A1.2 | B1.4 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 114 | A1.2 | B1.4 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 115 | A1.2 | B1.4 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 116 | A1.2 | B1.4 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 117 | A1.2 | B1.5 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 118 | A1.2 | B1.5 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 119 | A1.2 | B1.5 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 120 | A1.2 | B1.5 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 121 | A1.2 | B1.6 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 122 | A1.2 | B1.6 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 123 | A1.2 | B1.6 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 124 | A1.2 | B1.6 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20, C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 125 | A1.2 | B1.7 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 126 | A1.2 | B1.7 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 127 | A1.2 | B1.7 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20, C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 128 | A1.2 | B1.7 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 129 | A1.2 | B1.8 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20, C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 130 | A1.2 | B1.8 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 131 | A1.2 | B1.8 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 132 | A1.2 | B1.8 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 133 | A1.2 | B1.9 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20, C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 134 | A1.2 | B1.9 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 135 | A1.2 | B1.9 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20, C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 136 | A1.2 | B1.9 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 137 | A1.2 | B1.10 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20, C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 138 | A1.2 | B1.10 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20, C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 139 | A1.2 | B1.10 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20, C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 140 | A1.2 | B1.10 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 141 | A1.2 | B1.11 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 142 | A1.2 | B1.11 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 143 | A1.2 | B1.11 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 144 | A1.2 | B1.11 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 145 | A1.2 | B1.12 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 146 | A1.2 | B1.12 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 147 | A1.2 | B1.12 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 148 | A1.2 | B1.12 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30, C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 149 | A1.2 | B1.13 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 150 | A1.2 | B1.13 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 151 | A1.2 | B1.13 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 152 | A1.2 | B1.13 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 153 | A1.2 | B1.14 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 154 | A1.2 | B1.14 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 155 | A1.2 | B1.14 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 156 | A1.2 | B1.14 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 157 | A1.2 | B1.15 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 158 | A1.2 | B1.15 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 159 | A1.2 | B1.15 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 160 | A1.2 | B1.15 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 161 | A1.2 | B1.16 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 162 | A1.2 | B1.16 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 163 | A1.2 | B1.16 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 164 | A1.2 | B1.16 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 165 | A1.2 | B1.17 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 166 | A1.2 | B1.17 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 167 | A1.2 | B1.17 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 168 | A1.2 | B1.17 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 169 | A1.2 | B1.18 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 170 | A1.2 | B1.18 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 171 | A1.2 | B1.18 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 172 | A1.2 | B1.18 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 173 | A1.2 | B1.19 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 174 | A1.2 | B1.19 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 175 | A1.2 | B1.19 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 176 | A1.2 | B1.19 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 177 | A1.2 | B1.20 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 178 | A1.2 | B1.20 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 179 | A1.2 | B1.20 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 180 | A1.2 | B1.20 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 181 | A1.2 | B1.21 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 182 | A1.2 | B1.21 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 183 | A1.2 | B1.21 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 184 | A1.2 | B1.21 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 185 | A1.2 | B1.22 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 186 | A1.2 | B1.22 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 187 | A1.2 | B1.22 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 188 | A1.2 | B1.22 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 189 | A1.2 | B1.23 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 190 | A1.2 | B1.23 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 191 | A1.2 | B1.23 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 192 | A1.2 | B1.23 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 193 | A1.3 | B1.0 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 194 | A1.3 | B1.0 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 195 | A1.3 | B1.0 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 196 | A1.3 | B1.0 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 197 | A1.3 | B1.1 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 198 | A1.3 | B1.1 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 199 | A1.3 | B1.1 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 200 | A1.3 | B1.1 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 201 | A1.3 | B1.2 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 202 | A1.3 | B1.2 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 203 | A1.3 | B1.2 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 204 | A1.3 | B1.2 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 205 | A1.3 | B1.3 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 206 | A1.3 | B1.3 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 207 | A1.3 | B1.3 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 208 | A1.3 | B1.3 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 209 | A1.3 | B1.4 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 210 | A1.3 | B1.4 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 211 | A1.3 | B1.4 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 212 | A1.3 | B1.4 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 213 | A1.3 | B1.5 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20, C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 214 | A1.3 | B1.5 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 215 | A1.3 | B1.5 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 216 | A1.3 | B1.5 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 217 | A1.3 | B1.6 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 218 | A1.3 | B1.6 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 219 | A1.3 | B1.6 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 220 | A1.3 | B1.6 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 221 | A1.3 | B1.7 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 222 | A1.3 | B1.7 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 223 | A1.3 | B1.7 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 224 | A1.3 | B1.7 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 225 | A1.3 | B1.8 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 226 | A1.3 | B1.8 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 227 | A1.3 | B1.8 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 228 | A1.3 | B1.8 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 229 | A1.3 | B1.9 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 230 | A1.3 | B1.9 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 231 | A1.3 | B1.9 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 232 | A1.3 | B1.9 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 233 | A1.3 | B1.10 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 234 | A1.3 | B1.10 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 235 | A1.3 | B1.10 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 236 | A1.3 | B1.10 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 237 | A1.3 | B1.11 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 238 | A1.3 | B1.11 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 239 | A1.3 | B1.11 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 240 | A1.3 | B1.11 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 241 | A1.3 | B1.12 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 242 | A1.3 | B1.12 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 243 | A1.3 | B1.12 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 244 | A1.3 | B1.12 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 245 | A1.3 | B1.13 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 246 | A1.3 | B1.13 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 247 | A1.3 | B1.13 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 248 | A1.3 | B1.13 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 249 | A1.3 | B1.14 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 250 | A1.3 | B1.14 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 251 | A1.3 | B1.14 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 252 | A1.3 | B1.14 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 253 | A1.3 | B1.15 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 254 | A1.3 | B1.15 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 255 | A1.3 | B1.15 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 256 | A1.3 | B1.15 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 257 | A1.3 | B1.16 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 258 | A1.3 | B1.16 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 259 | A1.3 | B1.16 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 260 | A1.3 | B1.16 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 261 | A1.3 | B1.17 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 262 | A1.3 | B1.17 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 263 | A1.3 | B1.17 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 264 | A1.3 | B1.17 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 265 | A1.3 | B1.18 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 266 | A1.3 | B1.18 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 267 | A1.3 | B1.18 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 268 | A1.3 | B1.18 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 269 | A1.3 | B1.19 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 270 | A1.3 | B1.19 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 271 | A1.3 | B1.19 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 272 | A1.3 | B1.19 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 273 | A1.3 | B1.20 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 274 | A1.3 | B1.20 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 275 | A1.3 | B1.20 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 276 | A1.3 | B1.20 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 277 | A1.3 | B1.21 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23, C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 278 | A1.3 | B1.21 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 279 | A1.3 | B1.21 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

(fortgesetzt)

| Nr. | Wirkstoff (A) | Wirkstoff (B) | Wirkstoff (C) |
|---|---|---|---|
| 280 | A1.3 | B1.21 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 281 | A1.3 | B1.22 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 282 | A1.3 | B1.22 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 283 | A1.3 | B1.22 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 284 | A1.3 | B1.22 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 285 | A1.3 | B1.23 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 286 | A1.3 | B1.23 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 287 | A1.3 | B1.23 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |
| 288 | A1.3 | B1.23 | C1.1, C1.2, C1.3, C1.4, C1.5, C1.6, C1.7, C1.8, C1.9, C1.10, C1.11, C1.12, C1.13, C1.14, C1.15, C1.16, C1.17, C1.18, C1.19, C1.20; C1.21, C1.22, C1.23 , C1.24, C1.25, C1.26, C1.27, C1.28, C1.29, C1.30; C2.1, C2.2, C2.3, C2.4, C2.5, C2.6, C2.7, C2.8, C2.9, C2.1 0, C2.11, C2.12, C2.13, C2.14, C2.15; C3.1, C3.2, C3.3; C4.1, C4.2, C4.3, C4.4, C4.5; C5.1 |

Die Aufwandmengen der Wirkstoffe (C) können stark variieren. Als grobe Richtgröße können folgende Bereiche gelten:

Im Allgemeinen 0,5 - 5000 g AS/ha, bevorzugt 1 bis 4000 g AS/ha, besonders bevorzugt 1,5 - 3000 g AS/ha.

Einige der genannten Kombinationen sind neu und als solche auch Gegenstand der Erfindung.

Die erfindungsgemäßen Kombinationen (= herbiziden Mittel) weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden durch die Wirkstoffe gut erfasst. Dabei ist es gleichgültig, ob die Substanzen im Vorsaat-, Vorauflauf- oder Nachauflaufverfahren ausgebracht werden. Bevorzugt ist die Anwendung im Nachauflaufverfahren oder im frühen Nachsaat-Vorauflaufverfahren.

Im einzelnen seien beispielhaft einige Vertreter der mono- und dikotylen Unkrautflora genannt, die durch die erfindungsgemäßen Mittel kontrolliert werden können, ohne dass durch die Nennung eine Beschränkung auf bestimmte Arten erfolgen soll.

Monokotyle Schadpflanzen der Gattungen: Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Leptochloa, Lolium, Monochoria, Panicum, Paspalum, Phalaris, Phleum, Poa, Rottboellia, Sagittaria, Scirpus, Setaria, Sorghum.

Dikotyle Unkräuter der Gattungen: Abutilon, Amaranthus, Ambrosia, Anoda, Anthemis, Aphanes, Artemisia, Atriplex, Bellis, Bidens, Capsella, Carduus, Cassia, Centaurea, Chenopodium, Cirsium, Convolvulus, Datura, Desmodium, Emex, Erysimum, Euphorbia, Galeopsis, Galinsoga, Galium, Hibiscus, Ipomoea, Kochia, Lamium, Lepidium, Lindernia, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola, Xanthium.

Aus beiden Gruppen werden erfindungsgemäß auch solche Schadpflanzen bekämpft, die resistent sind gegen ein oder mehrere Herbizide bzw. Herbizidgruppen, z.B. solche Schadpflanzen, die aufgrund einer Target-Site-Resistenz oder metabolischen Resistenz von ACCAse-Inhibitoren, ALS-Inhibitoren oder EPSPS-Inhibitoren sowie Auxinen; HPPD-inhibitoren nicht mehr bekämpft werden.

Werden die erfindungsgemäßen Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Die erfindungsgemäßen herbiziden Mittel zeichnen sich im Vergleich zu den Einzelpräparaten durch eine schneller einsetzende und länger andauernde herbizide Wirkung aus. Die Regenfestigkeit der Wirkstoffe in den erfindungsgemäßen Kombinationen ist in der Regel günstig. Als besonderer Vorteil fällt ins Gewicht, dass die in den Kombinationen verwendeten und wirksamen Dosierungen von Verbindungen (A) und (B) so gering eingestellt werden können, dass ihre Bodenwirkung optimal und gegenüber Folgekulturen vorteilhaft ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Bei der gemeinsamer Anwendung von Herbiziden des Typs (A)+(B) treten überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine Reduzierung der Aufwandmenge, die Bekämpfung eines breiteren Spektrums von Unkräutern und Ungräsern (insbesondere auch von resistenten Unkräutern und Ungräsern), einen schnelleren Eintritt der herbiziden Wirkung, eine längere Dauerwirkung, eine bessere Kontrolle der Schadpflanzen mit nur einer bzw. wenigen Applikationen sowie eine Ausweitung des möglichen Anwendungszeitraums. Teilweise wird durch den Einsatz der Mittel auch die Menge an schädlichen Inhaltsstoffen in der Kulturpflanze, wie Stickstoff oder Ölsäure, reduziert.

Die genannten Eigenschaften und Vorteile sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Obgleich die erfindungsgemäßen Mittel eine ausgezeichnete herbizide Aktivität gegenüber mono- und dikotylen Unkräutern aufweisen, werden die toleranten bzw. kreuztoleranten Sojapflanzen nur unwesentlich oder gar nicht geschädigt.

Darüber hinaus weisen die erfindungsgemäßen Mittel teilweise hervorragende wachstumsregulatorische Eigenschaften bei den Soja- und Leguminosenarten auf. Sie greifen regulierend in den pflanzeneigenen Stoffwechsel ein und können damit zur gezielten Beeinflussung von Pflanzeninhaltsstoffen eingesetzt werden. Des Weiteren eignen sie sich auch zur generellen Steuerung und Hemmung von unerwünschtem vegetativen Wachstum, ohne dabei die Pflanzen

zu schädigen. Eine Hemmung des vegetativen Wachstums spielt bei vielen mono- und dikotylen Kulturen eine große Rolle, da das Lagern durch verbesserte Standfestigkeit verringert oder völlig verhindert werden kann.

Aufgrund ihrer herbiziden und pflanzenwachstumsregulatorischen Eigenschaften können die Mittel zur Bekämpfung von Schadpflanzen in bekannten toleranten oder kreuztoleranten Soja- und Leguminosenarten oder noch zu entwickelnden toleranten oder gentechnisch veränderten Soja- und Leguminosenarten eingesetzt werden. Die transgenen Pflanzen zeichnen sich in der Regel durch besondere vorteilhafte Eigenschaften aus, neben den Resistenzen gegenüber den erfindungsgemäßen Mitteln beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung spezieller Inhaltsstoffe. So sind transgene Pflanzen mit erhöhtem Protein-Gehalt an gewünschten Inhaltsstoffen oder veränderter Qualität, z. B. anderer Fett- und/oder Aminosäurezusammensetzung des Ernteguts bekannt.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z.B. EP-A 0 221 044, EP-A 0 131 624). Beschrieben wurden beispielsweise in mehreren Fällen

- gentechnische Veränderungen von Kulturpflanzen zwecks Modifikation der in den Pflanzen synthetisierten Stärke (z.B. WO 92/011376 A, WO 92/014827 A, WO 91/019806 A),
- transgene Kulturpflanzen, welche gegen bestimmte Herbizide vom Typ Glyphosate (WO 92/000377 A) oder der Sulfonylharnstoffe (EP 0 257 993 A, US 5,013,659) oder gegen Kombinationen oder Mischungen dieser Herbizide durch "gene stacking" resistent sind, wie transgene Kulturpflanzen z. B. Mais oder Soja mit dem Handelsnamen oder der Bezeichnung Optimum™ GAT™ (Glyphosate ALS Tolerant).
- transgene Kulturpflanzen, beispielsweise Baumwolle, mit der Fähigkeit Bacillus thuringiensis-Toxine (Bt-Toxine) zu produzieren, welche die Pflanzen gegen bestimmte Schädlinge resistent machen (EP-A 0 142 924, EP-A 0 193 259).
- transgene Kulturpflanzen mit modifizierter Fettsäurezusammensetzung (WO 91/013972 A).
- gentechnisch veränderte Kulturpflanzen mit neuen Inhalts- oder Sekundärstoffen z.B. neuen Phytoalexinen, die eine erhöhte Krankheitsresistenz verursachen (EP 0 309 862 A, EP 0 464 461 A)
- gentechnisch veränderte Pflanzen mit reduzierter Photorespiration, die höhere Erträge und höhere Stresstoleranz aufweisen (EP 0 305 398 A)
- transgene Kulturpflanzen, die pharmazeutisch oder diagnostisch wichtige Proteine produzieren ("molecular pharming")
- transgene Kulturpflanzen, die sich durch höhere Erträge oder bessere Qualitat auszeichnen
- transgene Kulturpflanzen die sich durch eine Kombinationen z.B. der o. g. neuen Eigenschaften auszeichnen ("gene stacking")

Zahlreiche molekularbiologische Techniken, mit denen neue transgene Pflanzen mit veränderten Eigenschaften hergestellt werden können, sind im Prinzip bekannt; siehe z.B. I. Potrykus und G. Spangenberg (eds.) Gene Transfer to Plants, Springer Lab Manual (1995), Springer Verlag Berlin, Heidelberg. oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe von Standardverfahren können z.B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden, siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z.B. die codierende Region mit DNA-Sequenzen verknüpft werden, die die Lokalisierung in einem

bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106). Die Expression der Nukleinsäuremoleküle kann auch in den Organellen der Pflanzenzellen stattfinden.

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h., sowohl monokotyle als auch dikotyle Pflanzen.

So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Vorzugsweise können die erfindungsgemäßen Mittel in transgenen Soja- und Leguminosenarten eingesetzt werden, welche nicht nur gegen die Komponente (A), sondern auch gegen Wuchsstoffe (wie z.B. 2,4-D oder Dicamba), Verbindungen der Gruppe (B) oder gegen Herbizide, die essentielle Pflanzenenzyme, z.B. Acetolactatsynthasen (ALS), EPSP Synthasen oder Hydoxyphenylpyruvat Dioxygenasen (HPPD) hemmen, respektive gegen Herbizide aus der Gruppe der Sulfonylharnstoffe, der Glyphosate oder Benzoylisoxazole und analogen Wirkstoffe, oder gegen beliebige Kombinationen dieser Wirkstoffe, tolerant sind.

Besonders bevorzugt können die erfindungsgemäßen Mittel in transgenen Soja- und Leguminosenarten eingesetzt werden, die gegen eine Kombination von Glyphosaten und Glufosinaten oder gegen eine Kombination von Glufosinaten und Sulfonylharnstoffen oder Imidazolinonen und/oder HPPD Inhibitoren tolerant sind.

Gegenstand der Erfindung ist deshalb auch ein Verfahren zur Bekämpfung von unerwünschtem Pflanzenwuchs in toleranten Soja- und Leguminosenarten, dadurch gekennzeichnet, dass man ein oder mehrere Herbizide des Typs (A) mit einem oder mehreren Herbiziden des Typs (B) auf die Schadpflanzen, Pflanzenteile davon oder die Anbaufläche appliziert.

Gegenstand der Erfindung sind auch die neuen Kombinationen aus Verbindungen (A)+(B) und diese enthaltende herbizide Mittel.

Die erfindungsgemäßen Wirkstoffkombinationen können sowohl als Co- oder

Mischformulierungen der zwei Komponenten, gegebenenfalls mit weiteren Wirkstoffen, Zusatzstoffen und/oder üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die erfindungsgemäßen Mittel können in Form von Spritzpulvern, emulgierbaren Konzentraten, versprühbaren Lösungen, Stäubemitteln oder Granulaten in den üblichen Zubereitungen angewendet werden. Gegenstand der Erfindung sind deshalb auch herbizide und pflanzenwachstumsregulierende Mittel, welche die erfindungsgemäßen Mittel enthalten.

Die erfindungsgemäßen Mittel können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), wasserlösliche Pulver (SP), wasserlösliche Konzentrate, emulgierbare Konzentrate (EC), Emulsionen (EW), wie Öl-in-Wasser- und Wasser-in-Öl-Emulsionen, versprühbare Lösungen, Suspensionskonzentrate (SC), Dispersionen auf Öl-oder Wasserbasis, ölmischbare Lösungen, Kapselsuspensionen (CS), Stäubemittel (DP), Beizmittel, Granulate für die Streu- und Bodenapplikation, Granulate (GR) in Form von Mikro-, Sprüh-, Aufzugs- und Adsorptionsgranulaten, wasserdispergierbare Granulate (WG), wasserlösliche Granulate (SG), ULV-Formulierungen, Mikrokapseln und Wachse.

Diese einzelnen Formulierungstypen sind im Prinzip bekannt und werden beispielsweise beschrieben in: Winnacker-Küchler, "Chemische Technologie", Band 7, C. Hanser Verlag München, 4. Aufl. 1986; Wade van Valkenburg, "Pesticide Formulations", Marcel Dekker, N.Y., 1973; K. Martens, "Spray Drying" Handbook, 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hanser Verlag München, 4. Aufl. 1986.

Auf der Basis dieser Formulierungen lassen sich auch Kombinationen mit anderen pestizid wirksamen Stoffen, wie z.B. Insektiziden, Akariziden, Herbiziden, Fungiziden, sowie mit Safenern, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Tenside ionischer und/oder nichtionischer Art (Netzmittel, Dispergiermittel), z.B.

polyoxyethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten. Zur Herstellung der Spritzpulver werden die herbiziden Wirkstoffe beispielsweise in üblichen Apparaturen wie Hammermühlen, Gebläsemühlen und Luftstrahlmühlen feingemahlen und gleichzeitig oder anschließend mit den Formulierungshilfsmitteln vermischt.

Emulgierbare Konzentrate werden durch Auflösen des Wirkstoffes in einem organischen Lösungsmittel z.B. Butanol, Cyclohexanon, Dimethylformamid, Xylol oder auch höhersiedenden Aromaten oder Kohlenwasserstoffen oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calzium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanester wie z.B. Sorbitanfettsäureester oder Polyoxethylensorbitanester wie z.B. Polyoxyethylensorbitanfettsäureester.

Stäubemittel erhält man durch Vermahlen des Wirkstoffes mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls Zusatz von Tensiden, wie sie z.B. oben bei den anderen Formulierungstypen bereits aufgeführt sind, hergestellt werden.

Emulsionen, z.B. Öl-in-Wasser-Emulsionen (EW), lassen sich beispielsweise mittels Rührern, Kolloidmühlen und/oder statischen Mischern unter Verwendung von wässrigen organischen Lösungsmitteln und gegebenenfalls Tensiden, wie sie z.B. oben bei den anderen Formulierungstypen bereits aufgeführt sind, herstellen.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischern und Extrusion ohne festes Inertmaterial hergestellt.

Zur Herstellung von Teller-, Fließbett-, Extruder- und Sprühgranulate siehe z.B. Verfahren in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die agrochemischen Zubereitungen enthalten in der Regel 0,1 bis 99 Gew.-%, insbesondere 0,1 bis 95 Gew.-%, erfindungsgemäße Mittel.

In Spritzpulvern beträgt die Wirkstoffkonzentration z.B. etwa 10 bis 90 Gew.-%, der Rest zu 100 Gew.-% besteht aus üblichen Formulierungsbestandteilen. Bei emulgierbaren Konzentraten kann die Wirkstoffkonzentration etwa 1 bis 90, vorzugsweise 5 bis 80 Gew.-% betragen. Staubförmige Formulierungen enthalten 1 bis 30 Gew.-% Wirkstoff, vorzugsweise meistens 5 bis 20 Gew.-% an Wirkstoff, versprühbare Lösungen enthalten etwa 0,05 bis 80, vorzugsweise 2 bis 50 Gew.-% Wirkstoff. Bei wasserdispergierbaren Granulaten hängt der Wirkstoffgehalt zum Teil davon ab, ob die wirksame Verbindung flüssig oder fest vorliegt und welche Granulierhilfsmittel, Füllstoffe usw. verwendet werden. Bei den in Wasser dispergierbaren Granulaten liegt der Gehalt an Wirkstoff beispielsweise zwischen 1 und 95 Gew.-%, vorzugsweise zwischen 10 und 80 Gew.-%.

Daneben enthalten die genannten Wirkstoffformulierungen gegebenenfalls die jeweils üblichen Haft-, Netz-, Dispergier-, Emulgier-, Penetrations-, Konservierungs-, Frostschutz- und Lösungsmittel, Füll-, Träger- und Farbstoffe, Entschäumer, Verdunstungshemmer und den pH-Wert und die Viskosität beeinflussende Mittel.

Beispielsweise ist bekannt, dass die Wirkung von Glufosinate-ammonium (A1.2) ebenso wie die seines L-Enantiomeren durch oberflächenaktive Substanzen verbessert werden kann, vorzugsweise durch Netzmittel aus der Reihe der Alkyl-polyglykolethersulfate, die beispielsweise 6 bis 18 C-Atomen enthalten und in Form ihrer Alkali- oder Ammoniumsalze, aber auch als Magnesiumsalz verwendet werden, wie $C_{12}/C_{14}$-Fettalkohol-diglykolethersulfat-Natrium (®Genapol LRO, Hoechst); siehe EP-A-0 476 555, EP-A-0 048 436, EP-A-0 336 151 oder US 4,400,196 sowie Proc. EWRS Symp. "Factors Affecting Herbicidal Activity and Selectivity", 227 - 232 (1988). Weiterhin ist bekannt, dass Alkylpolyglykolethersulfate auch als Penetrationshilfsmittel und Wirkungsverstärker für eine Reihe anderer Herbizide, unter anderem auch für Herbizide aus der Reihe der Imidazolinone geeignet ist; siehe EP-A-0 502 014.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (landwirtschaftliche oder gärtnerische Nutzfläche) ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Wirkstoffe in Form von Tankmischungen, wobei die optimal formulierten konzentrierten

Formulierungen der Einzelwirkstoffe gemeinsam im Tank mit Wasser und/oder Düngemittel-Lösungen gemischt und die erhaltene Spritzbrühe ausgebracht wird.

Eine gemeinsame herbizide Formulierung der erfindungsgemäßen Kombination an Wirkstoffen (A) und (B) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

A. Formulierungsbeispiele

a) Ein Stäubemittel wird erhalten, indem man 10 Gew.-Teile einer erfindungsgemäßen Wirkstoffkombination und 90 Gew.-Teile Talkum als Inertstoff mischt und in einer Schlagmühle zerkleinert.

b) Ein in Wasser leicht dispergierbares, benetzbares Pulver wird erhalten, indem man 25 Gewichtsteile einer erfindungsgemäßen Wirkstoffkombination, 64 Gew.-Teile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile einer erfindungsgemäßen Wirkstoffkombination mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis über 277 C) mischt und in einer Reibkugelmühle auf eine Feinheit von unter 5 Mikron vermahlt.

d) Ein emulgierbares Konzentrat wird erhalten aus 15 Gew.-Teilen einer erfindungsgemäßen Wirkstoffkombination, 75 Gew.-Teilen Cyclohexanon als Lösungsmittel und 10 Gew.-Teilen oxethyliertes Nonylphenol als Emulgator.

e) Ein in Wasser dispergierbares Granulat wird erhalten indem man
75 Gew.-Teile einer erfindungsgemäßen Wirkstoffkombination,
10 Gew.-Teile ligninsulfonsaures Calcium,
5 Gew.-Teile Natriumlaurylsulfat,
3 Gew.-Teile Polyvinylalkohol und
7 Gew.-Teile Kaolin
mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man
25 Gew.-Teile einer erfindungsgemäßen Wirkstoffkombination,
5 Gew.-Teile 2,2'-dinaphthylmethan-6,6'-disulfonsaures Natrium 2 Gew.-Teile oleoylmethyltaurinsaures Natrium,
1 Gew.-Teil Polyvinylalkohol,
17 Gew.-Teile Calciumcarbonat und
50 Gew.-Teile Wasser
auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

B. Biologische Beispiele

1. Unkrautwirkung im Vorauflauf

Samen bzw. Rhizomstücke von mono- und dikotylen Unkrautpflanzen werden in Plastik- oder Papptöpfen in sandiger Lehmerde ausgelegt und mit Erde abgedeckt. Die in Form von konzentrierten wäßrigen Lösungen, benetzbaren

Pulvern oder Emulsionskonzentraten formulierten Mittel werden dann als wäßrige Lösung, Suspension bzw. Emulsion mit einer Wasseraufwandmenge von umgerechnet 100 bis 800 l/ha in unterschiedlichen Dosierungen auf die Oberfläche der Abdeckerde appliziert. Nach der Behandlung werden die Töpfe im Gewächshaus aufgestellt und unter guten Wachstumsbedingungen für die Unkräuter gehalten. Die optische Bonitur der Pflanzen- bzw. Auflaufschäden erfolgt nach dem Auflaufen der Versuchspflanzen nach einer Versuchszeit von 3 bis 8 Wochen im Vergleich zu unbehandelten Kontrollen. Wie die Testergebnisse zeigen, weisen die erfindungsgemäßen Mittel eine gute herbizide Vorauflaufwirksamkeit gegen ein breites Spektrum von Ungräsern und Unkräutern auf.

Dabei werden häufig Wirkungen der erfindungsgemäßen Kombinationen beobachtet, die die formale Summe der Wirkungen bei Einzelapplikation der Herbizide übertreffen (= synergistische Wirkung).

Wenn die beobachteten Wirkungswerte (= E) bereits die formale Summe ($E^A$= A+B) der Werte zu den Versuchen mit Einzelwirkstoffen übertreffen, dann übertreffen sie den Erwartungswert nach Colby (= $E^c$) ebenfalls, der sich nach folgender Formel errechnet und dessen Übertreffen ebenfalls als (Hinweis auf) Synergismus angesehen wird (vgl. S. R. Colby; in Weeds 15 (1967) S. 20 bis 22):

$$E^C = A+B-(A{\cdot}B/100)$$

Dabei bedeuten: A, B = Wirkung der Wirkstoffe A bzw. B in % bei a bzw. b g AS/ha; $E^c$ = Erwartungswert in % bei a+b g AS/ha.

Die beobachteten Werte der Versuche zeigen bei geeigneten niedrigen Dosierungen eine Wirkung der Kombinationen, die über den Erwartungswerten nach Colby liegen.

2. Unkrautwirkung im Nachauflauf

Samen bzw. Rhizomstücke von mono- und dikotylen Unkräutern werden in Papptöpfen in sandigem Lehmboden ausgelegt, mit Erde abgedeckt und im Gewächshaus unter guten Wachstumsbedingungen angezogen. Drei Wochen nach der Aussaat werden die Versuchspflanzen im Dreiblattstadium mit den erfindungsgemäßen Mitteln behandelt. Die als Spritzpulver bzw. als Emulsionskonzentrate formulierten erfindungsgemäßen Mittel werden in verschiedenen Dosierungen mit einer Wasseraufwandmenge von umgerechnet 600 bis 800 l/ha auf die grünen Pflanzenteile gesprüht. Nach ca. 3 bis 4 Wochen Standzeit der Versuchspflanzen im Gewächshaus unter optimalen Wachstumsbedingungen wird die Wirkung der Präparate optisch im Vergleich zu unbehandelten Kontrollen bonitiert. Die erfindungsgemäßen Mittel weisen auch im Nachauflauf eine gute herbizide Wirksamkeit gegen ein breites Spektrum wirtschaftlich wichtiger Ungräser und Unkräuter auf.

Dabei werden häufig Wirkungen der erfindungsgemäßen Kombinationen beobachtet, die die formale Summe der Wirkungen bei Einzelapplikation der Herbizide übertreffen. Die beobachteten Werte der Versuche zeigen bei geeigneten niedrigen Dosierungen eine Wirkung der Kombinationen, die über den Erwartungswerten nach Colby (vgl. Bonitur in Beispiel 1) liegen.

3. Herbizide Wirkung und Kulturpflanzenverträglichkeit (Feldversuch)

Pflanzen von transgene Soja- und Leguminosenarten mit einer Resistenz gegen ein oder mehrere Herbizide (A) werden zusammen mit typischen Unkrautpflanzen im Freiland auf Parzellen der Größe 2 x 5 m unter natürlichen Freilandbedingungen herangezogen; alternativ stellt sich beim Heranziehen der Sojapflanzen die Verunkrautung natürlich ein. Die Behandlung mit den erfindungsgemäßen Mitteln und zur Kontrolle separat mit alleiniger Applikation der Komponentenwirkstoffe erfolgt unter Standardbedingungen mit einem Parzellen-Spritzgerät bei einer Wasseraufwandmenge von 100-400 Liter Wasser je Hektar in Parallelversuchen gemäß dem Schema aus Tabelle 3, d. h. im Vorsaat, im Nachsaat-Vorauflauf oder im Nachauflauf im frühen, mittleren oder späten Stadium.

Tabelle 3: Anwendungsschema - Beispiele [1)]

| Applikation der Wirkstoffe | Vorsaat | Vorauflauf nach Saat | Nachauflauf 1-2-Blatt | Nachauflauf 2-4-Blatt | Nachauflauf 6-Blatt |
|---|---|---|---|---|---|
| kombiniert | (A)+(B) | | | | |
| " | | (A)+(B) | | | |
| " | | | (A)+(B) | | |
| " | | | | (A)+(B) | |

(fortgesetzt)

| Applikation der Wirkstoffe | Vorsaat | Vorauflauf nach Saat | Nachauflauf 1-2-Blatt | Nachauflauf 2-4-Blatt | Nachauflauf 6-Blatt |
|---|---|---|---|---|---|
| " | | | | | (A)+(B) |
| sequentiell | (A) | | (B) | | |
| " | | (A) | (B) | | |
| " | | (A) | | (B) | |
| " | | (A) | (A) | (B) | |
| " | | (A) | | (B) | (B) |
| " | | (A) | | (A)+(B) | |
| " | (B) | | (A) | | |
| " | | (B) | | (A)+(B) | |
| " | (A)+(B) | | (A)+(B) | | |
| " | (A)+(B) | (A)+(B) | (A)+(B) | | |
| " | | (A)+(B) | (A)+(B) | | |
| " | | (A)+(B) | (A)+(B) | (A)+(B) | |
| " | | (A)+(B) | (A)+(B) | (A)+(B) | (A)+(B) |
| " | | | (A)+(B) | (A)+(B) | |
| " | | | (A)+(B) | (A)+(B) | (A)+(B) |
| " | | | | (A)+(B) | (A)+(B) |
| 1) Wobei jeweils eine C-Komponente zu A)/ B) oder A+B) dazu gemischt bzw. in Sequenz vor oder nach der Anwendung von A)/ B) oder A+B) appliziert sein kann. | | | | | |

Im Abstand von 2 bis 8 Wochen nach Applikation wird die herbizide Wirksamkeit der Wirkstoffe bzw. Wirkstoffmischungen anhand der behandelten Parzellen im Vergleich zu unbehandelten Kontroll-Parzellen visuell bonitiert. Dabei wird Schädigung und Entwicklung aller oberirdischen Pflanzenteile erfasst. Die Bonitierung erfolgt nach einer Prozentskala (100% Wirkung = alle Pflanzen abgestorben; 50 % Wirkung = 50% der Pflanzen und grünen Pflanzenteile abgestorben; 0 % Wirkung = keine erkennbare Wirkung = wie Kontrollparzelle. Die Boniturwerte von jeweils 2-4 Parzellen wird gemittelt.

Der Vergleich zeigte, dass die erfindungsgemäßen Kombinationen meist mehr, teilweise erheblich mehr herbizide Wirkung aufweisen als die Summe der Wirkungen der Einzelherbizide. Die Wirkungen lagen in wesentlichen Abschnitten des Boniturzeitraums über den Erwartungswerten nach Colby und belegen einen Synergismus. Die Soja- und Leguminosenarten dagegen wurden infolge der Behandlungen mit den herbiziden Mitteln nicht oder nur unwesentlich geschädigt.

In den Tabellen allgemein verwendete Abkürzungen:

g AS/ha - Gramm Aktivsubstanz (100 % Wirkstoff) pro Hektar

$E^A$ = Summe der herbiziden Wirkungen der Einzelapplikationen (Erwartungswert nach der Additionsmethode)

$E^c$ = Erwartungswert nach Colby (vgl. Bonitur zu Tabelle 1)

"Soja LL" = ®Liberty-Link-Soja, gegen Glufosinate-ammonium tolerant oder resistent ist,

## Patentansprüche

1. Verwendung von Herbizid-Kombinationen zur Bekämpfung von Schadpflanzen in Soja- und Leguminosenarten, **dadurch gekennzeichnet, dass** die jeweilige Herbizid-Kombination

(A) ein Herbizid aus der Gruppe der Verbindungen der Formel (A1),

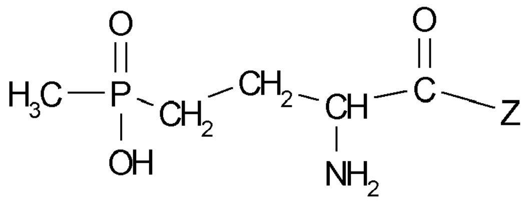

(A1)

worin Z für Hydroxy, $-NHCH(CH_3)CONHCH(CH_3)COOH$ oder $-NHCH(CH_3)CONHCH[CH_2CH(CH_3)_2]COOH$ steht,
oder dessen Ester oder Salze, und
(B) ein Herbizid der Formel (B1),

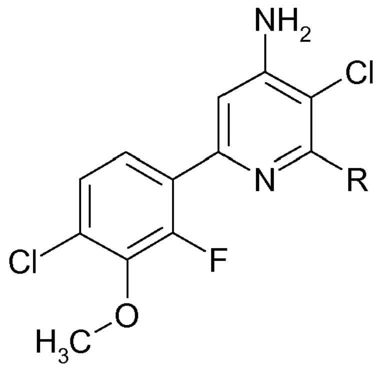

(B1)

worin R für $CO_2H$ oder ein herbizid-aktives Derivat steht,

enthält und die Sojakulturen gegenüber den in der Kombination enthaltenen Herbiziden (A) und (B) tolerant sind.

**2.** Verwendung gemäß Anspruch 1, **dadurch gekennzeichnet, dass** die Herbizid-Kombination neben den Komponenten (A) und (B) wenigstens einen weiteren Wirkstoff aus der Gruppe der Safener, Pflanzenwachstumsregulatoren, Herbizide, Fungizide oder Insektizide enthält.

**3.** Verwendung gemäß Anspruch 1 oder 2, **dadurch gekennzeichnet, dass** die Sojakultur in Gegenwart eines Safeners gegen die Herbizid-Kombination tolerant ist.
Verwendung gemäß einem oder mehreren der Ansprüche 1 bis 3, **dadurch gekennzeichnet, dass** die Herbizid-Kombination weiterhin eine Komponente (C) enthält, die ausgewählt ist aus der Gruppe bestehend aus Trifluralin (C1.1), Metribuzin (C1.2), Clomazone (C1.3), Pendimethalin (C1.4), Metolachlor/ S-Metolachlor (C1.5), Flumetsulam (C1.6), Dimethenamid/ Dimethenamid-p (C1.7), Alachlor (C1.8), Linuron (C1.9), Sulfentrazone (C1.10), Ethalfluralin (C1.11), Fluthiamide (C1.12), Norflurazon (C1.13), Vernolate (C1.14), Flumioxazin (C1.15), Imazapyr/ Imazapyr-isopropylammonium (C1.16), Imazamox/ Imazamox-ammonium (C1.17), Imazaquin/ Imazaquin-ammonium (C1.18), Diflufenzopyr (C.1.19), Carfentrazone (C.1.20), Imazethapyr/ Imazethapyr-ammonium (C.1.21), Dicamba (C.1.22), Mesotrione (C.1.23), Bicyclopyrone (C. 1.24) Pyrasulfutole (C.1.26), Tembotrione (C.1.27), Isoxaflutole (C.1.28), Sulcotrione (C.1.29), Topramezone (C.1.30), Chlorotoluron (C2.1), Bentazone (C2.2), Thifensulfuron (C2.3), Oxyfluorfen (C2.4), Lactofen (C2.5), Fomesafen (C2.6), Flumiclorac (C2.7), Acifluorfen und dessen Natriumsalz (C2.8), 2,4-DB (C2.9), 2,4-D (C2.10) Chlorimuron/ Chlorimuron-ethyl (C2.11), Cloransulam/ Cloransulam-methyl (C2.12), Diclosulam (2.13), Fluthiacet/ Fluthiacet-methyl (C2.14), Oxasulfuron (C2.15), Sethoxydim (C3.1), Cycloxydim (C3.2), Clethodim (C3.3),Quizalofop-P und dessen Ethyl- oder Tefurylester (C4.1), Fenoxaprop-P und dessen Ethylester (C4.2), Fluazifop-P und dessen Butylester (C4.3), Haloxyfop /Haloxyfop-P und deren Methyl- oder der -ethylester(C4.4), Propaquizafop (C4.5), Paraquat/ Paraquat-dichlorid (C5.1).

**4.** Verwendung gemäß einem oder mehreren der Ansprüche 1 bis 4, **dadurch gekennzeichnet, dass** die Herbizid-Kombination eine Komponente (C) ausgewählt aus Clethodim, Cycloxydim und Fenoxaprop-P-ethyl enthält.

5. Verwendung gemäß einem oder mehreren der Ansprüche 1 bis 5, **dadurch gekennzeichnet, dass** als Komponente (A) Glufosinate-Ammonium enthalten ist.

6. Verwendung gemäß einem oder mehreren der Ansprüche 1 bis 6, **dadurch gekennzeichnet, dass** die Sojakultur weiterhin tolerant ist gegen 2,4-D, Dicamba, Imidazolinone oder gegen Herbizide, die Acetolactatsynthase (ALS), EPSP Synthase oder Hydoxyphenylpyruvat Dioxygenase (HPPD) hemmen.

7. Verwendung gemäß Anspruch 7, **dadurch gekennzeichnet, dass** die Sojakultur tolerant ist gegen 2,4-D, Dicamba, wenigstens ein Sulfonylharnstoff-Herbizid, wenigstens ein Sulfonamid-Herbizid, Glyphosate, Mesotrione, Bicyclopyrone, Pyrasulfutole, Tembotrione, Sulcotrione, Topramezone oder Isoxaflutole.

8. Verwendung gemäß einem oder mehreren der Ansprüche 1 bis 8, **dadurch gekennzeichnet, dass** die Komponente (B) ausgewählt ist aus

    - 4-Amino-3-chlor-6-(4-chlor-2-fluor-3-methoxyphenyl)pyridin-2-carbonsäure (B1.0),
    - 4-Amino-3-chlor-6-(4-chlor-2-fluor-3-methoxyphenyl)pyridin-2-carbonsäure methylester (B1.1),
    - 4-Amino-3-chlor-6-(4-chlor-2-fluor-3-methoxyphenyl)pyridin-2-carbonsäure ethylester (B1.2),
    - 4-Amino-3-chlor-6-(4-chlor-2-fluor-3-methoxyphenyl)pyridin-2-carbonsäuren-propylester (B1.3),
    - 4-Amino-3-chlor-6-(4-chlor-2-fluor-3-methoxyphenyl)pyridin-2-carbonsäure-i-propylester (B1.4),
    - 4-Amino-3-chlor-6-(4-chlor-2-fluor-3-methoxyphenyl)pyridin-2-carbonsäuren-butylester (B1.5),
    - 4-Amino-3-chlor-6-(4-chlor-2-fluor-3-methoxyphenyl)pyridin-2-carbonsäure-2-butylester (B1.6),
    - 4-Amino-3-chlor-6-(4-chlor-2-fluor-3-methoxyphenyl)pyridin-2-carbonsäure-tert-butylester (B1.7),
    - 4-Amino-3-chlor-6-(4-chlor-2-fluor-3-methoxyphenyl)pyridin-2-carbonsäure-allylester (B1.8),
    - 4-Amino-3-chlor-6-(4-chlor-2-fluor-3-methoxyphenyl)pyridin-2-carbonsäure-2-butoxy-ethylester (B1.9),
    - 4-Amino-3-chlor-6-(4-chlor-2-fluor-3-methoxyphenyl)pyridin-2-carbonsäure-triethylammoniumsalz (B1.10) und
    - 4-Amino-3-chlor-6-(4-chlor-2-fluor-3-methoxyphenyl)pyridin-2-carbonsäure-Kaliumsalz (B1.11)
    - 6-Amino-5-chlor-2-(4-chlor-2-fluor-3-methoxyphenyl)pyrimidin-4-carbonsäure (B1.12)
    - 6-Amino-5-chlor-2-(4-chlor-2-fluor-3-methoxyphenyl)pyrimidin-4-carbonsäure-methylester (B1.13)
    - 6-Amino-5-chlor-2-(4-chlor-2-fluor-3-methoxyphenyl)pyrimidin-4-carbonsäure-ethylester (B1.14)
    - 6-Amino-5-chlor-2-(4-chlor-2-fluor-3-methoxyphenyl)pyrimidin-4-carbonsäure-n-propylester (B1.15)
    - 6-Amino-5-chlor-2-(4-chlor-2-fluor-3-methoxyphenyl)pyrimidin-4-carbonsäure-i-propylester (B1.16)
    - 6-Amino-5-chlor-2-(4-chlor-2-fluor-3-methoxyphenyl)pyrimidin-4-carbonsäure-n-butylester (B1.17)
    - 6-Amino-5-chlor-2-(4-chlor-2-fluor-3-methoxyphenyl)pyrimidin-4-carbonsäure-2-butylester (B1.18)
    - 6-Amino-5-chlor-2-(4-chlor-2-fluor-3-methoxyphenyl)pyrimidin-4-carbonsäure-tert-butylester (B1.19)
    - 6-Amino-5-chlor-2-(4-chlor-2-fluor-3-methoxyphenyl)pyrimidin-4-carbonsäure-allylester (B1.20)
    - 6-Amino-5-chlor-2-(4-chlor-2-fluor-3-methoxyphenyl)pyrimidin-4-carbonsäure-2-butoxy-ethylester (B1.21)
    - 6-Amino-5-chlor-2-(4-chlor-2-fluor-3-methoxyphenyl)pyrimidin-4-carbonsäure-triethylammoniumsalz (B1.22)
    - 6-Amino-5-chlor-2-(4-chlor-2-fluor-3-methoxyphenyl)pyrimidin-4-carbonsäure-Kaliumsalz (B1.23)

9. Verwendung gemäß Anspruch 9, **dadurch gekennzeichnet, dass** der Wirkstoff (B) ausgewählt ist aus 4-Amino-3-chlor-6-(4-chlor-2-fluor-3-methoxyphenyl)pyridin-2-carbonsäure (B1.0) u n d 4-Amino-3-chlor-6-(4-chlor-2-fluor-3-methoxyphenyl)pyridin-2-carbonsäure-methylester (B1.1)

10. Verwendung gemäß Anspruch 9, **dadurch gekennzeichnet, dass** der Wirkstoff (B) ausgewählt ist aus 6-Amino-5-chlor-2-(4-chlor-2-fluor-3-methoxyphenyl)pyrimidin-4-carbonsäure (B 1 . 1 2) u n d 6-Amino-5-chlor-2-(4-chlor-2-fluor-3-methoxyphenyl)pyrimidin-4-carbonsäure-methylester (B1.13)

11. Wirkstoffzusammensetzung enthaltend Glufosinate-Ammonium und als Wirkstoff (B) eine Verbindung ausgewählt aus

    - 4-Amino-3-chlor-6-(4-chlor-2-fluor-3-methoxyphenyl)pyridin-2-carbonsäure (B1.0),
    - 4-Amino-3-chlor-6-(4-chlor-2-fluor-3-methoxyphenyl)pyridin-2-carbonsäure - methylester (B1.1),
    - 4-Amino-3-chlor-6-(4-chlor-2-fluor-3-methoxyphenyl)pyridin-2-carbonsäure - ethylester (B1.2),
    - 4-Amino-3-chlor-6-(4-chlor-2-fluor-3-methoxyphenyl)pyridin-2-carbonsäuren-propylester (B1.3),
    - 4-Amino-3-chlor-6-(4-chlor-2-fluor-3-methoxyphenyl)pyridin-2-carbonsäure-i-propylester (B1.4),
    - 4-Amino-3-chlor-6-(4-chlor-2-fluor-3-methoxyphenyl)pyridin-2-carbonsäuren-butylester (B1.5),
    - 4-Amino-3-chlor-6-(4-chlor-2-fluor-3-methoxyphenyl)pyridin-2-carbonsäure-2-butylester (B1.6),

- 4-Amino-3-chlor-6-(4-chlor-2-fluor-3-methoxyphenyl)pyridin-2-carbonsäure-tert-butylester (B1.7),
- 4-Amino-3-chlor-6-(4-chlor-2-fluor-3-methoxyphenyl)pyridin-2-carbonsäure-allylester (B1.8),
- 4-Amino-3-chlor-6-(4-chlor-2-fluor-3-methoxyphenyl)pyridin-2-carbonsäure-2-butoxy-ethylester (B1.9),
- 4-Amino-3-chlor-6-(4-chlor-2-fluor-3-methoxyphenyl)pyridin-2-carbonsäure-triethylammoniumsalz (B1.10),
- 4-Amino-3-chlor-6-(4-chlor-2-fluor-3-methoxyphenyl)pyridin-2-carbonsäure-Kaliumsalz (B1.11),
- 6-Amino-5-chlor-2-(4-chlor-2-fluor-3-methoxyphenyl)pyrimidin-4-carbonsäure (B1.12),
- 6-Amino-5-chlor-2-(4-chlor-2-fluor-3-methoxyphenyl)pyrimidin-4-carbonsäure-methylester (B1.13),
- 6-Amino-5-chlor-2-(4-chlor-2-fluor-3-methoxyphenyl)pyrimidin-4-carbonsäure-ethylester (B1.14),
- 6-Amino-5-chlor-2-(4-chlor-2-fluor-3-methoxyphenyl)pyrimidin-4-carbonsäure-n-propylester (B1.15),
- 6-Amino-5-chlor-2-(4-chlor-2-fluor-3-methoxyphenyl)pyrimidin-4-carbonsäure-i-propylester (B1.16),
- 6-Amino-5-chlor-2-(4-chlor-2-fluor-3-methoxyphenyl)pyrimidin-4-carbonsäure-n-butylester (B1.17),
- 6-Amino-5-chlor-2-(4-chlor-2-fluor-3-methoxyphenyl)pyrimidin-4-carbonsäure-2-butylester (B1.18),
- 6-Amino-5-chlor-2-(4-chlor-2-fluor-3-methoxyphenyl)pyrimidin-4-carbonsäure-tert-butylester (B1.19),
- 6-Amino-5-chlor-2-(4-chlor-2-fluor-3-methoxyphenyl)pyrimidin-4-carbonsäure-allylester (B1.20),
- 6-Amino-5-chlor-2-(4-chlor-2-fluor-3-methoxyphenyl)pyrimidin-4-carbonsäure-2-butoxy-ethylester (B1.21),
- 6-Amino-5-chlor-2-(4-chlor-2-fluor-3-methoxyphenyl)pyrimidin-4-carbonsäure-triethylammoniumsalz (B1.22) und
- 6-Amino-5-chlor-2-(4-chlor-2-fluor-3-methoxyphenyl)pyrimidin-4-carbonsäure-Kaliumsalz (B1.23).

**12.** Wirkstoffzusammensetzung gemäß Anspruch 12, wobei der Wirkstoff (B) ausgewählt ist aus 4-Amino-3-chlor-6-(4-chlor-2-fluor-3-methoxyphenyl)pyridin-2-carbonsäure (B1.0) und 4-Amino-3-chlor-6-(4-chlor-2-fluor-3-methoxyphenyl)pyridin-2-carbonsäure-methylester (B1.1).

**13.** Wirkstoffzusammensetzung gemäß Anspruch 12, wobei der Wirkstoff (B) ausgewählt ist aus 6-Amino-5-chlor-2-(4-chlor-2-fluor-3-methoxyphenyl)pyrimidin-4-carbonsäure (B1.12) und 6-Amino-5-chlor-2-(4-chlor-2-fluor-3-methoxyphenyl)pyrimidin-4-carbonsäure-methylester (B1.13).

**14.** Wirkstoffzusammensetzung gemäß einem oder mehreren der Ansprüche 12 bis 14, enthaltend außerdem einen Safener und/oder ein weiteres Herbizid (C).

Europäisches Patentamt
European Patent Office
Office européen des brevets

# EUROPÄISCHER RECHERCHENBERICHT

Nummer der Anmeldung
EP 11 16 6986

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | US 2007/179060 A1 (BALKO TERRY W [US] ET AL) 2. August 2007 (2007-08-02)<br>* Seite 1, Absatz 5 - Absatz 22 *<br>* Seite 19, Absatz 313; Verbindung 42 *<br>* Seite 21, Absatz 356; Verbindung 86 *<br>* Seite 21, Absatz 374; Verbindung 100 *<br>* Seite 22, Absatz 409; Verbindung 135 *<br>* Seite 1, Absatz 4 *<br>* Seite 6, Absatz 78 *<br>* Seite 24, Absatz 432 - Seite 28, Absatz 435; Tabelle 4 *<br>* Seite 30; Tabelle 7 *<br>----- | 1-15 | INV.<br>A01N57/20<br>A01N43/40<br>A01N43/54<br>A01P13/02 |
| Y,D | US 2007/179059 A1 (EPP JEFFREY B [US] ET AL) 2. August 2007 (2007-08-02)<br>* Seite 1 - Seite 2 *<br>* Seite 1, Absatz 4 *<br>* Seite 7, Absatz 65 *<br>* Seite 13, Absatz 118; Verbindung 3 *<br>* Seite 14, Absatz 134; Verbindung 15 *<br>* Seite 18, Absatz 163 - Absatz 166; Tabelle 4 *<br>----- | 1-15 | RECHERCHIERTE SACHGEBIETE (IPC)<br>A01N |
| Y,D | US 2009/062121 A1 (SATCHIVI NORBERT M [US] ET AL) 5. März 2009 (2009-03-05)<br>* Seite 1, Absatz 6 - Absatz 7 *<br>* Seite 1, Absatz 11 - Seite 2, Absatz 18 *<br>* Seite 9 - Seite 37; Tabellen 1-113 *<br>----- | 1-15 | |
| Y | US 7 105 470 B1 (HACKER ERWIN [DE] ET AL) 12. September 2006 (2006-09-12)<br>* Spalte 2, Zeile 1 - Zeile 40; Verbindung A *<br>* Spalte 2, Zeile 40 - Zeile 59; Verbindung B *<br>* Spalte 19 - Spalte 22; Tabellen 2-10 *<br>----- | 1-15 | |

Der vorliegende Recherchenbericht wurde für alle Patentansprüche erstellt

2

| Recherchenort | Abschlußdatum der Recherche | Prüfer |
|---|---|---|
| München | 29. September 2011 | Sawicki, Marcin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 11 16 6986

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-09-2011

| Im Recherchenbericht angeführtes Patentdokument | Datum der Veröffentlichung | Mitglied(er) der Patentfamilie | Datum der Veröffentlichung |
|---|---|---|---|
| US 2007179060 A1 | 02-08-2007 | AR 059010 A1 | 05-03-2008 |
| | | AU 2007204825 A1 | 19-07-2007 |
| | | BR PI0706398 A2 | 22-03-2011 |
| | | CA 2626103 A1 | 19-07-2007 |
| | | CN 101360713 A | 04-02-2009 |
| | | EP 1973881 A2 | 01-10-2008 |
| | | EP 2060566 A1 | 20-05-2009 |
| | | JP 2009519982 A | 21-05-2009 |
| | | JP 2010001300 A | 07-01-2010 |
| | | KR 20080057335 A | 24-06-2008 |
| | | KR 20080053413 A | 12-06-2008 |
| | | KR 20080053529 A | 13-06-2008 |
| | | WO 2007082098 A2 | 19-07-2007 |
| US 2007179059 A1 | 02-08-2007 | US 2009149329 A1 | 11-06-2009 |
| | | US 2008091016 A1 | 17-04-2008 |
| | | US 2011190133 A1 | 04-08-2011 |
| US 2009062121 A1 | 05-03-2009 | AR 068617 A1 | 25-11-2009 |
| | | AU 2008293698 A1 | 05-03-2009 |
| | | CA 2693519 A1 | 05-03-2009 |
| | | CN 101808520 A | 18-08-2010 |
| | | EA 201070319 A1 | 30-12-2010 |
| | | EP 2180790 A2 | 05-05-2010 |
| | | JP 2010537996 A | 09-12-2010 |
| | | KR 20100034769 A | 01-04-2010 |
| | | WO 2009029518 A2 | 05-03-2009 |
| US 7105470 B1 | 12-09-2006 | AR 066640 A2 | 02-09-2009 |
| | | AU 5620599 A | 06-03-2000 |
| | | BR 9913640 A | 05-06-2001 |
| | | CA 2340185 A1 | 24-02-2000 |
| | | CN 1317932 A | 17-10-2001 |
| | | DE 19836660 A1 | 17-02-2000 |
| | | WO 0008934 A1 | 24-02-2000 |
| | | EP 2329718 A1 | 08-06-2011 |
| | | EP 2327305 A1 | 01-06-2011 |
| | | EP 2329719 A1 | 08-06-2011 |
| | | EP 1107667 A1 | 20-06-2001 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2717440 A
- WO 2007082098 A
- WO 2009029518 A
- EP 0242246 A
- EP 0242236 A
- EP 0257542 A
- EP 0275957 A
- EP 0513054 A
- EP 0221044 A
- EP 0131624 A
- WO 92011376 A
- WO 92014827 A
- WO 91019806 A
- WO 92000377 A
- EP 0257993 A
- US 5013659 A
- EP 0142924 A
- EP 0193259 A
- WO 91013972 A
- EP 0309862 A
- EP 0464461 A
- EP 0305398 A
- EP 0476555 A
- EP 0048436 A
- EP 0336151 A
- US 4400196 A
- EP 0502014 A


### In der Beschreibung aufgeführte Nicht-Patentliteratur


- The Pesticide Manual. British Crop Protection Council, 1997, 643-645
- *Zuckerrübe,* 1998, 217 ff
- Gene Transfer to Plants, Springer Lab Manual. Springer Verlag, 1995
- **CHRISTOU.** *Trends in Plant Science,* 1996, vol. 1, 423-431
- **SAMBROOK et al.** Molecular Cloning, A Laboratory Manual. Cold Spring Harbor Laboratory Press, 1989
- **WINNACKER.** Gene und Klone. VCH, 1996
- **BRAUN et al.** *EMBO J.,* 1992, vol. 11, 3219-3227
- **WOLTER et al.** *Proc. Natl. Acad. Sci. USA,* 1988, vol. 85, 846-850
- **SONNEWALD et al.** *Plant J.,* 1991, vol. 1, 95-106
- **WINNACKER-KÜCHLER.** Chemische Technologie. C. Hanser Verlag, 1986, vol. 7
- **WADE VAN VALKENBURG.** Pesticide Formulations. Marcel Dekker, 1973
- **K. MARTENS.** Spray Drying'' Handbook. G. Goodwin Ltd, 1979
- **WATKINS.** Handbook of Insecticide Dust Diluents and Carriers. Darland Books
- **H.V. OLPHEN.** Introduction to Clay Colloid Chemistry. J. Wiley & Sons
- **C. MARSDEN.** Solvents Guide. Interscience, 1963
- **MCCUTCHEON'S.** Detergents and Emulsifiers Annual. MC Publ. Corp,
- **SISLEY ; WOOD.** Encyclopedia of Surface Active Agents. Chem. Publ. Co. Inc, 1964
- **SCHÖNFELDT.** Grenzflächenaktive Äthylenoxidaddukte. Wiss. Verlagsgesell, 1976
- Spray-Drying Handbook. G. Goodwin Ltd, 1979
- **J.E. BROWNING.** Agglomeration. *Chemical and Engineering,* 1967, 147 ff
- Perry's Chemical Engineer's Handbook. McGraw-Hill, 1973, 8-57
- **G.C. KLINGMAN.** Weed Control as a Science. John Wiley and Sons, Inc, 1961, 81-96
- **J.D. FREYER ; S.A. EVANS.** Weed Control Handbook. Blackwell Scientific Publications, 1968, 101-103
- Factors Affecting Herbicidal Activity and Selectivity. *Proc. EWRS Symp.,* 1988, 227-232
- **S. R. COLBY.** *Weeds,* 1967, vol. 15, 20-22